# EUROPÄISCHE PATENTSCHRIFT

(11) **EP 3 243 769 B1**
(45) Veröffentlichungstag und Bekanntmachung des Hinweises auf die Patenterteilung: **18.09.2024**
(21) Anmeldenummer: 17171189.8
(22) Anmeldetag: 15.05.2017
(51) Int. Cl.: B65G 1/04

(54) **VERFAHREN UND VORRICHTUNG ZUM LAGERN VON STÜCKGUT MIT ÜBERBRÜCKBAREN REGALREIHEN**
METHOD AND STORAGE DEVICE FOR STORING PIECE GOODS WITH BRIDGEABLE SHELF ROWS
PROCÉDÉ ET DISPOSITIF DE STOCKAGE DE MARCHANDISES AU DÉTAIL À L'AIDE DE RANGÉES D'ÉTAGÈRES POUVANT ÊTRE RELIÉES

(30) Priorität: 14.05.2016 DE 102016108992
(43) Veröffentlichungstag der Anmeldung: 15.11.2017
(73) Patentinhaber: Föller, Jörg, 75334 Straubenhardt (DE)
(72) Erfinder: Föller, Jörg, 75334 Straubenhardt (DE)
(74) Vertreter: RPK Patenanwälte Reinhardt und Kaufmann Partnerschaft mbB (Pforzheim)

(56) Entgegenhaltungen:
- EP-A1- 1 028 074
- DE-A1- 102013 005 614
- GB-A- 2 094 770
- US-A1- 2016 060 037

## Beschreibung

Die Erfindung betrifft ein Verfahren zum Ausführen eines Arbeitsspiels eines Hochregallagers sowie ein das Fördermittel aufweisendes Hochregallager zum Lagern von Stückgut.

Hochregallager, darin verwendete Fördermittel sowie entsprechende Steuerungen und Betriebsverfahren sind bekannt. Zum Transportieren von Stückgut können insbesondere Stetigförderer wie Fließbänder oder Unstetigförderer verwendet werden, z.B. in Form von speziellen, auf eine Lagerform abgestimmten Regalbediengeräten, Staplern und/oder Unterfahrschleppern. Unterfahrschlepper können ein Stückgut unterfahren und dieses zwischen zwei Orten transportieren, insbesondere durch Anheben und Verfahren entlang einer Transportrichtung. Dazu können die Unterfahrschlepper einen entsprechenden Antrieb und einen Hubtisch zum Anheben und Absenken des Stückguts aufweisen. Das Stückgut kann z.B. auf einem Rollwagen gelagert sein, der mittels des Unterfahrschleppers unterfahrbar ist. Sogenannte Regalbediengeräte können in einer zwischen zwei Regalreihen gebildeten Gasse eines Hochregallagers in Richtung der Gasse verfahren werden. Es sind Regalbediengeräte bekannt, die zweidimensional verfahrbar sind, also in einer Horizontalrichtung und Vertikalrichtung der Gasse. Damit ist es möglich, innerhalb der Gasse unterschiedliche Lagerplätze der jeweiligen Regalreihen anzusteuern und entsprechende Ein- und Auslagerungen vorzunehmen. Außerdem ist es bekannt, derartige Unterfahrschlepper innerhalb einer Ebene eines mehrgeschossigen Lagers zu verwenden und damit einzelne Lagerplätze des entsprechenden Geschosses zu bedienen. Um einen solchen Vorgang in unterschiedlichen Geschossen eines solchen Lagers durchführen zu können, ist es bekannt, den Unterfahrschlepper mittels eines Vertikalförderers, gegebenenfalls zusammen mit dem Stückgut zwischen den Geschossen zu transportieren.

Aus der DE 10 2011 115 076 A1 ist eine entsprechende Vorrichtung zum Bewegen von Transporteinheiten von einer ersten Position zu einer zweiten Position bekannt, wobei diese wenigstens einen länglichen Shuttle aufweist, welcher in einem Verfahrwagen integriert ist. Dieses Shuttlesystem kann in einer Lagereinrichtung verwendet werden. Grundsätzlich können Hochregallager eine Übergabestelle zum Übergeben einzulagernder Stückgüter, eine Vorzone, die die Übergabestelle aufweist, sowie gegebenenfalls zum Transport der Stückgüter erforderliche Förderer, insbesondere Stetigförderer, Eckumsetzer und/oder Ähnliches aufweisen. Ferner sind Hochregallager bekannt, die in einer sogenannten Silobauweise errichtet werden, also wand- und deckentragend ausgeführt sind, sodass für eine entsprechende das Hochregallager umgebende Halle keine separate Konstruktion erforderlich ist.

Aus der DE 20 2004 012 021 U1 ist ein Lagersystem mit mindestens einem in einem Förderschacht zwischen zwei hintereinander angeordneten Regalsäulen vertikale oder vertikale und horizontale Bewegungen ausführenden, mit einer Horizontalfördereinrichtung versehenen Förderer bekannt, durch den Lagergutträger von mindestens einer Beschickungs- und Entnahmeöffnung in Fächer der Regalsäulen überführbar und aus ihnen zurück transportierbar sind. Das Lagersystem weist mindestens eine Reihe von mehr als zwei hintereinander platzierten, durch jeweils einen mit einem Förderer ausgestatteten Förderschacht voneinander getrennten Regalsäulen auf, wobei durch jeden der beidseits jeweils einer Regalsäule verfahrbaren Förderer sämtliche Fächer dieser Regalsäule unmittelbar, d. h. auf direktem Wege beschickbar bzw. entleerbar sind.

Bei einer Lagerliftanordnung mit zwei hintereinander angeordneten Lagerliften gemäß der DE 10 2006 008 932 A1 lassen sich Lagergutträger durch mehrere Vertikalförderer von einem zum anderen Lagerlift mittels zweier im Abstand voneinander und übereinander angeordneter Paare von Transfereinheiten überführen. Die Transfereinheiten bewegen die Lagergutträger in vertikaler Richtung.

Die DE 10 2014 012 254 A1 bezieht sich auf ein Lagersystem mit Regalreihen. Die Regalreihen sind jeweils durch dazwischen liegende Längsgassen voneinander beabstandet. Außerdem weist das Lagersystem Quergassen auf. In den Gassen kann ein Shuttle-Fahrzeug in einer Längsfahrt und einer Querfahrt bewegt werden, wobei ein Übergang von einer Längsfahrt in eine Querfahrt oder umgekehrt an einem Kreuzungsbereich erfolgt. Außerdem kann das Shuttle-Fahrzeug mit einer Hubeinrichtung zwischen Regalebenen des Lagersystems verlagert werden. Das Shuttle-Fahrzeug verfügt über einen Aufnahmebereich, der zur Aufnahme von mindestens zwei Lastaufnahmefahrzeugen gleichzeitig ausgebildet ist. Dazu weist das Shuttle-Fahrzeug eine Anordnung von Kanalprofilen auf. Dadurch können Kanalprofile von Lagerkanälen des Lagersystems fortgeführt werden.

Aus der EP 1 028 074 A1 ist ein Lagermagazin mit mehreren Hochregalen und zwischen den Hochregalen in Lagergängen angeordneten Fahrschienen für mindestens ein Regalbediengerät bekannt. Das Regalbediengerät weist einen sich auf einem Fahrwerk abstützenden vertikalen Mast auf, auf dem eine Hubtraverse höhenverfahrbar gelagert ist. Anschließend an die Hochregale ist neben einer Fahrschiene ein Übergabegebäude vorgesehen. Weiter vorgesehen sind auf den Schienen des Regalbediengeräts in den Lagergängen verfahrbare Transportwägen. Es ist möglich, die Transportwägen, die an Lagerflächen mit Rollen versehen sind, derart in den Lagergängen zu positionieren, dass quer zu den Lagergängen verlaufende Rollenbahnen durch die Transportwägen zu einer durchgehenden Rollenbahn ergänzt werden. Dadurch ergibt sich eine durchgehende Rollenbahn von dem Regalbediengerät zu einer Übergabestelle. EP 1 028 074 A1 offenbart ein Verfahren zum Ausführen eines Arbeitsspiels eines Hochregallagers mit mehreren Lagerplätzen und zumindest zwei Regalreihen, mit:
- Bilden eines Pickbewegungspfades zwischen einem Lagerplatz des Hochregallagers und einer Hubvorrichtung eine zweiten Fördermittels des Hochregallagers mittels einer Pickbrücke der Hubvorrichtung,
- Fördern eines in dem Hochregallager lagerbaren Stückguts entlang des Pickbewegungspfads,
- Überbrücken wenigstens einer zwischen den zumindest zwei Regalreihen des Hochregallagers verbleibenden Gasse des Hochregallagers, in der die Hubvorrichtung bewegbar ist, mittels einer zusätzlichen Handlingbrücke, mittels eines dritten Fördermittels verlagerbaren Handlingbrücke zum Bilden eines Bewegungspfads; 1f
- Verlagern der Pickbrücke mittels des zweiten Fördermittels,

EP 1 028 074 A1 offenbart das entsprechende Hochregallager.

Aufgabe der Erfindung ist es, eine Spielzeit eines Lagersystems, insbesondere eines Hochregallagers, mit möglichst geringem Aufwand unter gleichzeitiger Erhöhung des Raumnutzungsgrads, insbesondere eine horizontale Förderung eines Stückgutes innerhalb und/oder von und zu einem Ausgang des Lagersystems zu verbessern.

Die Aufgabe ist durch ein Verfahren mit den Merkmalen des Anspruches 1 zum Ausführen eines Arbeitsspiels eines Hochregallagers gelöst.

Das Verfahren kann sowohl zum Einlagern als auch zum Auslagern eines Stückguts angewendet werden, also eines Einzelspiels zum Einlagern oder Auslagern. Außerdem ist es denkbar, das Verfahren für ein Doppelspiel, also ein gleichzeitiges Ein- und Auslagern sowie ein Umlagern anzuwenden. Unter einem Bewegungspfad kann eine beliebige Einrichtung, Vorrichtung und/oder ein System zur landgebundenen Förderung entlang eines Pfads verstanden werden, insbesondere schienengebunden und/oder flurgebunden, vorzugsweise eine Einrichtung, Vorrichtung und/oder ein System, entlang der oder dem sich ein Fahrzeug zumindest innerhalb gewisser Grenzen geführt bewegen kann. Z.B. können darunter Stra-ßen, Leitlinien, Schienen, Tunnel, Rinnen, optische und/oder induktive Leitlinien und/oder Ähnliches verstanden werden. Ferner sind auch virtuelle Bewegungspfade denkbar, z.B. bei flurgebundenen gelenkten Fahrzeugen. In diesem Fall kann der Bewegungspfad einer vorgegebenen Soll-Trajektorie entsprechen, der das Fahrzeug durch geeignete Steuermittel entlang einer Ist-Trajektorie folgt. Insbesondere können auch Rollenbahnen und Luftkissenschwebebahnen und/oder Ähnliches unter einem Bewegungspfad verstanden werden. Unter einer Hubvorrichtung kann insbesondere ein Hubtisch und/oder eine Hubgabel verstanden werden. Erfindungsgemäß erfolgt das Überbrücken der zwei Regalreihen zum Bilden der Ausfahrt. Dadurch ist es im Vergleich zum Stand der Technik, bei dem z.B. mittels eines Hubbalkenpaars oder Shuttle-Fahrzeugs nur ein beidseitiges Beschicken von benachbarten Regalreihen oder mittels Lagerliften nur eine vertikale Förderung erfolgen kann, möglich, den Ausfahrbewegungspfad innerhalb des Hochregallagers, insbesondere über einzelne Lagerplätze der überbrückten Regalreihen hinweg zu bilden. Das Stückgut kann also innerhalb der Abmessungen des Hochregallagers mehr oder weniger beliebig in den drei Raumrichtungen von der Ausfahrt in dieses hinein oder zu dieser hin aus dem Hochregallager hinaus gefördert werden. Der Ausfahrbewegungspfad verläuft quer zu einer Ausrichtung der Regalreihen. Insbesondere können analog auch mehrere parallele Pfade gebildet werden, die quer zu einer Ausrichtung der Regelreihen bzw. Gassen des Hochregallagers verlaufen. Es ist denkbar, entsprechend mehrere Ausfahrten an diese anzuschließen oder diese nur für lagerinterne Bewegungen der Stückgüter zu verwenden, z.B. zum Puffern und/oder Kommissionieren. Insbesondere kann auf das Hochregallager umgebende Förderer, insbesondere Rollbahnen, Eckumsetzer, Kreuzungen, im Lager längs und quer verkehrende Transportfahrzeuge und/oder Ähnliches, verzichtet werden. Dadurch ergibt sich ein besonders kleiner Raumbedarf, wobei dennoch über den mittels des Überbrückens bildbaren Ausfahrbewegungspfad eine sehr schnelle Ein- und Auslagerung des Stückguts und damit eine Minimierung der Spielzeit erfolgen kann.

Das Verfahren sieht ein Bilden eines Pickbewegungspfades zwischen einem Lagerplatz des Hochregallagers und einer Hubvorrichtung des Hochregallagers mittels einer Pickbrücke der Hubanordnung und ein Bilden des Ausfahrbewegungspfades durch Überbrücken wenigstens einer zwischen zwei Regalreihen des Hochregallagers verbleibenden Gasse mittels einer zusätzlichen Handlingbrücke vor. Die zusätzliche Überbrückungsvorrichtung weist also die Handlingbrücke auf oder wird durch diese gebildet. Bei der Hubanordnung kann es sich z.B. um eine Mechanisierung eines sogenannten Regalbediengerätes handeln, das innerhalb der zwischen den Regalreihen verbleibenden Gasse des Hochregallagers verlagerbar ist. Dabei kann die Hubanordnung zweidimensional, also in einer horizontalen entlang der Gasse ausgerichteten Pickrichtung und einer senkrecht dazu stehenden vertikalen Pickrichtung verlagerbar sein, sodass sämtliche Lagerplätze einer Regalreihe bzw. beider Regalreihen beidseitig ansteuerbar sind. Dabei ist es möglich, mittels der Pickbrücke jeweils zwei sich gegenüberliegende Lagerplätze der jeweiligen Regalreihen zu überbrücken. Die Hubvorrichtung bzw. die Pickbrücke der Hubvorrichtung kann Teil eines Regalbediengerätes sein. Vorteilhaft kann mittels der Pickbrücke das Be- oder Entlagern des entsprechenden Lagerplatzes erfolgen, und zwar beim Auslagern vor dem Puffern und beim Einlagern nach dem Puffern. Von dem Pufferlager bzw. der Pufferebene bzw. dem Pufferlagerplatz kann das Stückgut zu der Handlingbrücke weitertransportiert werden oder von dort gepuffert werden und über den Ausfahrbewegungspfad aus- oder eingelagert werden. Insbesondere lässt sich die Handlingbrücke selbst analog der Pickbrücke der Hubvorrichtung verwenden, wobei diese zumindest in einer Dimension, nämlich in der horizontalen Pickrichtung, vorzugsweise innerhalb der Pufferebene oder zumindest auf der Ebene, in der sich der Pufferlagerplatz befindet, innerhalb der Gasse verfahrbar ist. Es können also sowohl die Handlingbrücke als auch die Pick-brücke innerhalb der Gasse entlang der horizontalen Pickrichtung verlagert werden. Vorzugsweise kann dabei gleichzeitig das Stückgut gefördert werden, insbesondere zwischen dem entsprechenden Pufferlagerplatz und dem endgültigen Lagerplatz der entsprechenden Regalreihe, wie z.B. mittels der Hubvorrichtung und zwischen dem Pufferlagerplatz und dem Ausfahrbewegungspfad, insbesondere mittels der Handlingbrücke. Es wird ersichtlich, dass im Vergleich zu üblichen Hochregallagern zumindest in einer Dimension, nämlich horizontal entlang der Gasse zwei unterschiedliche Möglichkeiten zur Förderung des Stückgutes bestehen und zusätzlich auf derselben Ebene eine Puffermöglichkeit vorhanden ist. Dadurch können Ein- und Auslagervorgänge und/oder Kommissionierungen mit einem höheren Durchsatz erfolgen, sodass das Arbeitsspiel des Hochregallagers signifikant verbessert werden kann. Diese Strategie kann z.B. für ein Einzelspiel, ein Einzelspiel, bestehend aus einer Kommissionierung verschiedener Stückgüter, ein Doppelspiel, insbesondere zum Ein- und Auslagern zumindest zweier Stückgüter oder mehrere Stückgüter verwendet werden. Vorteilhaft kann bei einem hohen Durchsatz eine gewünschte Reihenfolge der Stückgüter auf der Ausfahrt realisiert werden.

Das Lagersystem des Hochregallagers, an dem das Verfahren ausführbar ist, weist ein zweites Fördermittel, ein drittes Fördermittel sowie ein erstes Fördermittel auf. Bei dem zweiten und dritten Fördermittel kann es sich um Unstetigförderer handeln, insbesondere um fahrerlose Transportfahrzeuge. Bei dem zweiten Fördermittel handelt es sich z.B. um ein Regalbediengerät, das zweidimensional die Lagerplätze innerhalb der Gasse anfahren kann, insbesondere mittels der Hubvorrichtung, die die Pickbrücke aufweist. Bei dem dritten Fördermittel handelt es sich z.B. um ein spurgeführtes fahrerloses Transportfahrzeug, das einen gemeinsamen Handlingbewegungspfad, insbesondere in Form einer Schiene zusammen mit dem zweiten Fördermittel befährt. Dadurch können das Anfahren der Lagerplätze, das Puffern und das Bilden des Ausfahrbewegungspfades und/oder ein dabei erfolgendes Kommissionieren in besonders kurzer Zeit erfolgen. Vorzugsweise können das zweite und/oder dritte Fördermittel aus der Gasse hinausbewegt werden. Besonders bevorzugt ist es denkbar, das dritte Fördermittel zum Transportieren der Handlingbrücke so zu gestalten oder auszurüsten, dass ein Raumbedarf außerhalb der Gasse besonders gering oder aktiv reduzierbar ist. Dadurch kann ein gesamter Raumbedarf des Lagersystems bzw. des Hochregallagers im Vergleich zu einer Anzahl lagerbarer Stückgüter weiter verbessert werden, wobei dennoch die vorab beschriebenen Vorteile erzielbar sind.

Durch Verstellen des dritten Fördermittels zwischen einer Arbeitsstellung und einer Ruhestellung, wobei die Ruhestellung einen verringerten Raumbedarf aufweist, und Überbrücken der Gasse in der Arbeitsstellung und Parken und/oder Bereithalten des dritten Fördermittels in der Ruhestellung wird ein eigentlich durch die Verwendung des dritten Fördermittels erhöhter Raumbedarf des Hochregallagers auf ein Minimum reduziert oder gar gänzlich vermieden. In der Ruhestellung weist das dritte Fördermittel bevorzugt einen derart verringerten Raumbedarf auf, dass dieses in einer Parkposition etwaige Bewegungen des zweiten Fördermittels innerhalb der Gasse nicht mehr behindert und durch den verringerten Raumbedarf möglichst wenig oder nicht störend an einem Ende der Gasse geparkt und/oder bereitgehalten werden kann. Unter einer Parkposition kann eine Position verstanden werden, an der das dritte Fördermittel bewegungslos geparkt ist. Gegebenenfalls kann in der Parkposition die Ruhestellung oder die Arbeitsstellung eingenommen werden. In der Parkposition wird also in der Ruhestellung ein verringerter Raumbedarf benötigt. Das dritte Fördermittel wird bevorzugt zum Ermöglichen eines Transports oder Transportieren des Stückguts ausschließlich horizontal bewegt, insbesondere im Wesentlichen geradlinig entlang der Fahrtrichtung. Zum Parken oder Bereithalten bzw. Verstellen zwischen Arbeitsstellung und Ruhestellung kann gegebenenfalls zusätzlich eine Verlagerung entlang einer abweichenden Richtung erfolgen, insbesondere schräg oder vertikal. Insbesondere kann die Verstellung lediglich durch Verlagern eines Teils, insbesondere der Handlingbrücke, des dritten Fördermittels erfolgen. Z.B. durch Schwenken, Drehen, Klappen, Aufrollen, Heben/Senken, Zusammenziehen/Vergrößern eines Maschinenfaltenbalgs und/oder Ausfahren/Einfahren.

Bevorzugt werden die Vorteile durch eine Kombination einer Hubanordnung und/oder Hubvorrichtung erzielt, die zumindest zum vertikalen Transport des Stückguts ausgelegt ist, insbesondere zum vertikalen und horizontalen Transport, und einer weiteren Überbrückungsvorrichtung, mittels der der Bewegungspfad, insbesondere Ausfahrbewegungspfad, bildbar ist. Es ist möglich, die zusätzliche Überbrückungsvorrichtung ausschließlich nur in einer Ebene, vorzugsweise einer horizontalen Ebene, des Hochregallagers zu bewegen. Bevorzugt kann die zusätzliche Überbrückungsvorrichtung ausschließlich nur entlang eines im Wesentlichen geraden Bewegungspfads bzw. Fahrtrichtung bewegt werden, wobei die Fahrtrichtung bzw. der Bewegungspfad vorzugsweise horizontal, besonders bevorzugt senkrecht zu dem Ausfahrbewegungspfad und/oder Pickbewegungspad verläuft. Die zusätzliche Überbrückungsvorrichtung wird insbesondere zum Ermöglichen eines Transports des Stückgutes nur in der horizontalen Ebene oder entlang der horizontalen Fahrtrichtung verlagert. Unter "senkrecht zu" kann eine orthogonale Anordnung z.B. zweier Richtungen zueinander verstanden werden. Unter vertikal/horizontal kann eine Raumrichtung rechtwinklig/parallel zur Erdoberfläche verstanden werden.

Eine Ausführungsform des Verfahrens sieht ein Puffern des Stückguts zwischen dem Fördern auf dem Pickbewegungspfad und dem Ausfahrbewegungspfad vor. Unter Puffern kann ein Zwischenlagern verstanden werden. Insbesondere erfolgt das Puffern auf einem Pufferlagerplatz. Bei dem Pufferlagerplatz kann es sich um einen einzelnen Lagerplatz an einer beliebigen Stelle des Hochregallagers handeln. Bevorzugt handelt es sich um einen Lagerplatz in einer Ebene des Hochregallagers, auf der sich die wenigstens eine Ausfahrt befindet und/oder in der der wenigstens eine Ausfahrbewegungspfad bildbar ist. Zum Ein- oder Auslagern des Stückguts kann dieses dann insbesondere direkt von dem Pufferlagerplatz innerhalb der entsprechenden Ebene mittels des Überbrückens über die Gasse hinweg, also entlang des Ausfahrbewegungspfades zur oder von der Ausfahrt gefördert werden. Alternativ kann der Pufferlagerplatz in einem zum Ausfahrbewegungspfad parallel angeordneten, insbesondere bildbaren und/oder ebenfalls durch das Überbrücken bildbaren, Bewegungspfad gepuffert werden und zum Auslagern von dort zunächst auf den Ausfahrbewegungspfad gefördert werden und dann von dort zur Ausfahrt. Bei einer bevorzugten Alternative ist es denkbar, die Ebene, auf der sich der Ausfahrbewegungspfad bilden lässt, ausschließlich zum Puffern der Stückgüter während des entsprechenden Arbeitsspiels zu verwenden. Dadurch kann eine Minimierung der Spielzeit erfolgen. Gemäß einer weiteren Variante ist es denkbar, die Pufferebene nur teilweise zum Puffern des Stückgutes zu verwenden. Dadurch kann eine Raumausnutzung des Hochregallagers verbessert werden, wobei gegebenenfalls eine geringfügige Erhöhung der Spielzeit auftreten kann. Durch das Puffern bzw. das Nutzen von Lagerplätzen auf der Pufferebene einerseits zum Puffern des Stückgutes und andererseits zum Bilden des Ausfahrbewegungspfades ist das Hochregallager hinsichtlich eines ökonomischen Prinzips, also hinsichtlich eines minimalen Aufwands und maximalen Erfolgs optimierbar. Je nachdem, welche Ressource bei der aktuellen Anwendung wichtig ist, können je nach Verwendung der Pufferebene ein Raumbedarf oder die Spielzeit auf ein Minimum reduziert werden oder ein bestmöglicher Kompromiss hinsichtlich beider Optimierungsstrategien gefunden werden. Durch das Verfahren ist also ein flexibel optimierbares Hochregallager hinsichtlich unterschiedlicher Kriterien möglich.

Eine weitere Ausführungsform des Verfahrens sieht ein Bilden des Pickbewegungspfads und des Ausfahrbewegungspfads durch Überbrücken der Gasse mittels einer gemeinsamen Brücke vor. Zum Bilden des Pickbewegungspfades und des Ausfahrbewegungspfades ist besonders ressourcenschonend lediglich die gemeinsame Brücke erforderlich. Diese wird dazu mittels einer Hubanordnung, insbesondere eines geeigneten Förderers, insbesondere eines zweidimensional innerhalb der Gasse verfahrbaren Regalbediengerätes, nacheinander entsprechend positioniert. Zum Puffern des Stückgutes kann ebenfalls die gemeinsame Brücke verwendet werden, wobei diese dazu so relativ zu einem entsprechenden Pufferlagerplatz der Pufferebene positioniert wird, dass dadurch ein Pufferbewegungspfad gebildet wird, also das Stückgut über diesen zwischen der Brücke und dem Pufferlagerplatz ein- und auslagerbar ist. Es sind also die Hubanordnung und zusätzlich die gemeinsame Brücke vorgesehen.

Ein Verlagern der Handlingbrücke innerhalb der Gasse zum wahlweisen Überbrücken von unterschiedlichen sich gegenüberliegenden Lagerplätzen zweier die Gasse bildenden Regalreihen des Hochregallagers ist bei einer bevorzugten Ausgestaltung des Verfahrens vorgesehen. Das Verlagern der Handlingbrücke innerhalb der Gasse kann bevorzugt mittels eines unabhängigen Fördermittels, z.B. eines schienengebundenen Unstetigförderers, insbesondere in Form eines fahrerlosen Transportfahrzeuges, erfolgen. Bevorzugt nutzt dieses dieselbe Schiene wie ein die Lagerplätze der Reihen zweidimensional bedienendes Regalbediengerät. Es ist denkbar, dass das weitere Fördermittel und/oder das Regalbediengerät wahlweise die Gasse verlassen, sodass dadurch jeweils von beiden Fördermitteln die gesamte Länge der Gasse angefahren werden kann bzw. die entsprechenden Lagerplätze der Gasse. Die beiden Fördermittel können mittels eines geeigneten Steuermittels kollisionsfrei gehalten werden, insbesondere mittels einer zentralen Steuerung, mitfahrenden Sensoren, einer die Gasse überwachenden Sensorik, wie z.B. einer bildgebenden Überwachung, elektromechanisch, mechanisch, leitungsgebunden, mittels eines gemeinsamen lateralen Positionierungssystems, mittels einer Abstandsmessung und Warnung/Bremsung bei Unterschreiten eines vorgebbaren Mindestabstands, eines Funkdatenaustauschsystems und/oder Ähnliches. Alternativ ist es denkbar, dass die ggf. auch antriebslose Handlingbrücke anhebbar ist, um eine Überfahrt zu ermöglichen. Ferner ist es denkbar, dass die Handlingbrücke um eine vertikale Achse gedreht wird, um eine Überfahrt zu ermöglichen.

Eine weitere bevorzugte Alternative sieht ein Verlagern der Handlingbrücke und der Hubvorrichtung entlang eines gemeinsamen Handlingbewegungspfades vor. Die Handlingbrücke wird an eine bestimmte Position verlagert, an der der Bewegungspfad, insbesondere der Ausfahrbewegungspfad gebildet ist. Vorzugsweise liegt der Bewegungspfad in einer Ebene, insbesondere horizontalen Ebene. Ein Verlassen der horizontalen Ebene kann zum Parken und/oder platzsparenden Verstauen der Handlingbrücke erfolgen, insbesondere um der Hubvorrichtung Platz zu machen. Zum Fördern des Stückgutes, also zum Bilden des Bewegungspfades, entlang dem das Stückgut gefördert werden kann, wird die Handlingbrücke vorzugsweise ausschließlich entlang oder in der Ebene bewegt. Die Hubvorrichtung kann in der Gasse eine beliebige Position einnehmen. Die Hubvorrichtung wird daher insbesondere vor dem Bilden des Bewegungspfads durch die Handlingsbrücke von der Position wegbewegt, falls Sie zuvor an dieser positioniert war. Andernfalls kann die Hubvorrichtung unbewegt bleiben oder bewegt werden, um einen Pickbewegungspfad zu bilden. Dies erfolgt vorzugsweise durch eine gemeinsame Steuerung. Alternativ kann auch ein weiterer Pickbewegungspfad gebildet werden, z.B. um parallel ein weiteres Stückgut zu fördern.

Das entsprechende Fördermittel zum Verlagern der Handlingbrücke, insbesondere das fahrerlose Transportfahrzeug bzw. Unstetigförderer, nutzt in Form des Handlingbewegungspfades einen gemeinsamen Fahrweg mit der Hubvorrichtung. Insbesondere kann die Handlingbrücke selbst als Fahrzeug ausgeführt oder Teil eines solchen sein. Der Handlingbewegungspfad kann in Form einer Straße, Fahrbahn oder bevorzugt mithilfe von Führungsmitteln wie Schienen, Führungsschienen, induktiven Leitlinien und/oder Ähnlichem ausgerüstet sein. Vorteilhaft kann die Gasse mit zwei oder mehr Fördermitteln bedient werden. Es kann also bei transienter Abwesenheit der Hubvorrichtung eine Förderung des Stückguts entlang des Bewegungspfads erfolgen, wobei der Bewegungspfad quer bzw. in einem Winkel, insbesondere senkrecht zu dem Handlingbewegungspfad verläuft. Der gemeinsame Handlingsbewegungspfad entspricht vorzugsweise einer Längsrichtung der entsprechenden Gasse, in der die Bewegungen der Hubvorrichtung und der Handlingbrücke erfolgen. Insbesondere sind eine Steuerung der Hubvorrichtung und der Handlingbrücke zum Koordinieren dieser Bewegungen sowie zum Vermeiden von Kollisionen miteinander verknüpft, vorzugsweise elektronisch, elektromechanisch und/oder mechanisch.

Bei einer weiteren Möglichkeit erfolgt ein Bilden einer Fahrmöglichkeit, insbesondere durch ein Unterfahren und Anheben des Stückguts, zum Fördern des Stückguts entlang des Bewegungspfads, insbesondere des Ausfahrbewegungspfads, und/oder des Pickbewegungspfads und/oder zum Puffern des Stückguts. Das Unterfahren und Anheben des Stückguts erfolgt bevorzugt mittels eines Hubtisches eines Unterfahrschleppers. Dadurch kann bei einem sehr geringen Raumbedarf der Transport des Stückgutes erfolgen. Insbesondere ist es möglich, dass das unstetige Fördermittel die Dimension in einer x-Richtung und einer y-Richtung des eigentlich zu transportierenden Stückgutes nicht vergrößert. Lediglich durch die geringe Hubbewegung in z-Richtung kann sich eine geringfügige Vergrößerung des Raumbedarfes zum Transportieren des Stückgutes im Vergleich zur Lagerung ergeben. Im Vergleich zu einer Verlagerung mittels einer sonst erforderlichen Anhebung mittels einer Hubgabel kann sich sogar ein geringerer Raumbedarf ergeben, da eine z.B. bei Gabelstaplern übliche Verschwenkung oder Schwenkung des Stückguts bzw. der Hubgabel nicht erforderlich ist. Dadurch können der Ausfahrbewegungspfad und/oder der Pickbewegungspfad und/oder ein zum Puffern erforderlicher Pufferbewegungspfad in einer minimalen Dimension vorgehalten werden. Insbesondere ist es denkbar, die Bewegungspfade lediglich mittels der einzelnen Lagerplätze und der die jeweilige Gasse überbrückenden Brücken darzustellen. Dazu weisen die entsprechenden Lagerplätze in Bewegungsrichtung bevorzugt beidseitig offene Lagerplatzbewegungspfade auf, die zusammen mit der entsprechenden Brücke zu dem Ausfahr-, Pick- und/oder Pufferbewegungspfad ergänzt werden können. Um das Lagersystem des Hochregallagers kollisionsfrei zu halten, weisen die einzelnen Fördermittel und/oder Lagerplätze anstelle von sonst gegebenenfalls erforderlichen Anschlägen entsprechende Steuerungsmittel auf, um die beim Handling des Stückguts erforderlichen Bewegungsabläufe entsprechend zu limitieren. Das entsprechende zum Unterfahren und Anheben erforderliche Fördermittel kann ein fahrerloses flurgebundenes und/oder schienengebundenes und/oder spurgeführtes Transportfahrzeug sein. Dementsprechend können die verwendeten Bewegungspfade eine Führungsvorrichtung wie z.B. Schienen, insbesondere beidseitige Schienen, z.B. in Form eines U-Profils aufweisen. Vorteilhaft kann das Stückgut auf dem U-Profil gelagert werden, wobei zum Ein- oder Auslagern innerhalb des U-s das entsprechende Fördermittel das entsprechende Stückgut unterfahren und anheben und transportieren kann. Gemäß einer Alternative ist es denkbar, anstatt des Unterfahrens und Anhebens an dem Ausfahr-, Pick- und/oder Pufferbewegungspfads, also innerhalb des gesamten Lagersystems inklusive der Brücken Rollenförderer vorzusehen, die mittels einer geeigneten Steuerung das Fördern des Stückguts übernehmen. Bei dieser Ausgestaltung kann auf ein weiteres Transportfahrzeug zum Unterfahren und Anheben verzichtet werden, wobei die Vorteile der gemeinsamen Nutzung der Gasse, des Pufferns und der damit verbundenen Reduzierung der Spielzeit ebenfalls erzielbar sind. Die Fahrmöglichkeit für das Stückgut oder des Stückguts kann auch anderweitig gebildet werden, z.B. durch ein Lösen einer Sperre oder Sicherung, z.B. einer Friktionssicherung oder Sperrklinke, die in einer ersten Einstellung einer Verlagerung des Stückgutes entgegenwirkt und in einer zweiten Einstellung zum Bilden der Fahrmöglichkeit dieses zur einfachen Verlagerung und Förderung freigibt.

Alternativ ist dies auch mittels eines ersten Fördermittels durchführbar. Das erste Fördermittel kann als Unterfahrschlepper und damit zum Unterfahren des Stückguts ausgebildet sein. Das eigentliche Fördern des Stückguts erfolgt durch Verlagern des gesamten ersten Fördermittels, wobei sich das Stückgut auf diesem befindet, insbesondere auf einem Hubtisch und/oder Drehtisch desselben. Alternativ ist es jedoch auch denkbar, dass das Stückgut lediglich unterfahren und geschleppt und/oder falls erforderlich gedreht wird, z.B. durch ein Einkoppeln des ersten Fördermittels an dem Stückgut. Dazu kann das Stückgut und/oder eine Vorrichtung, auf der das Stückgut sich zum Zwecke des Lagerns befindet, Rollen aufweisen. Alternativ ist es denkbar, dass die Rollen sich auf dem Ausfahr-, Pick- und/oder Pufferbewegungspfad, insbesondere beidseitig des U-Profils, befinden.

Gemäß einer Ausführungsform sind ein Fördern des Stückgutes und/oder des ersten Fördermittels durch Verlagern des das Stückgut tragenden ersten Fördermittels oder des ersten Fördermittels ohne das Stückgut auf die Handlingsbrücke des dritten Fördermittels und ein Verlagern des die Handlingsbrücke, das erste Fördermittel und/oder das Stückgut tragenden dritten Fördermittels vorgesehen. Dadurch ergibt sich eine größtmögliche Flexibilität beim Be- und/oder Entladen des Hochregallagers. Insbesondere kann das Puffern an den entsprechenden Pufferlagerplätzen bzw. innerhalb der Pufferebene wahlweise mittels des zweiten Fördermittels oder des dritten Fördermittels gegebenenfalls alleine erfolgen. Dadurch kann die Spielzeit weiter reduziert werden. Es ist nämlich möglich, dass das zweite Fördermittel entsprechende Pickaufträge ausführt und diese in der Pufferebene bzw. an den entsprechenden Pufferlagerplätzen puffert bzw. zwischenlagert, während das dritte Fördermittel zusammen mit dem ersten Fördermittel gänzlich unabhängig davon eine Ebene des Lagersystems bzw. des Hochregallagers bedient, also insbesondere das Puffern, das Bilden des Ausfahrbewegungspfades und/oder entsprechende Einlagerungs- und Auslagerungsvorgänge und/oder das Fördern der Stückgüter zwischen der Ausfahrt, insbesondere einem Übergabeplatz der Ausfahrt und den entsprechenden Pufferlagerplätzen und/oder Sortieraufgaben, z.B. zum Kommissionieren, übernimmt. Dazu kann wie vorab beschrieben parallel das zweite Fördermittel weitere Pickaufträge ausführen oder gegebenenfalls in einer Parkposition die Gasse verlassen bzw. freihalten. Insbesondere ist es denkbar, einen Teil der Pufferebene als Sorter auszubauen und/oder vorzuhalten. Der Betrieb des Sorters kann unabhängig oder mittels der Fördermittel erfolgen. Bevorzugt ist es denkbar, den Sorter wie vorab beschrieben mittels des dritten und ersten Fördermittels zu betreiben. Bevorzugt erfolgt das Verlagern des dritten Fördermittels entlang des Handlingbewegungspfades. Den Handlingbewegungspfad kann also das dritte Fördermittel gemeinsam mit dem zweiten Fördermittel befahren. Dadurch erfolgt eine schnellere und flexiblere Bedienung der Lagerplätze, in denen sich das dritte Fördermittel bewegt. Diese Ebene, insbesondere die Pufferebene, kann also durch zwei Fördermittel, die zwar den gemeinsamen Handlingbewegungspfad nutzen, die jedoch unabhängig voneinander ansteuerbar sind, bedient werden.

Vorzugsweise kann ein Bewegen der zusätzlichen Handlingsbrücke in der Gasse entlang einer senkrecht zu dem Pickbewegungspfad und dem Ausfahrbewegungspfad verlaufenden Fahrtrichtung erfolgen. Die zusätzliche Handlingbrücke kann einfach eindimensional entlang der linearen Fahrtrichtung gesteuert werden und ermöglicht wahlweise das Bilden des Ausfahrbewegungspfades oder ein schnelles und gezieltes Freigeben der Gasse für das Regalbediengerät bzw. zweite Fördermittel. Bevorzugt erfolgt die Bewegung ausschließlich horizontal, z.B. ausschließlich in einer Ebene, insbesondere einer horizontalen Ebene.

Das Verstellen kann z.B. durch Verschwenken, insbesondere um eine vertikale oder horizontale Schwenkachse, vorzugsweise horizontal in Längsrichtung der Gasse, erfolgen. Insbesondere kann ein Hochklappen von der Arbeitsstellung in die Ruhestellung erfolgen und umgekehrt. Alternativ oder zusätzlich kann ein Verschwenken um die vertikale Schwenkachse erfolgen z.B. so, dass die Handlingbrücke in der Ruhestellung im Wesentlichen in Längsrichtung der Gasse, insbesondere an einer Seite der Gasse, und in der Arbeitsstellung quer zu der Gasse angeordnet ist. Es ist denkbar, die gesamte Handlingbrücke zu klappen bzw. zu verschwenken oder zweigeteilt an jeweils einer Seite der Gasse bzw. sich gegenüberliegenden Seiten der Gasse einen Teil der Handlingbrücke durch Verschwenken hoch- und herunterzuklappen bzw. heraus- oder an die Seite der Gasse heranzuschwenken.

Außerdem ist es denkbar, die Handlingbrücke oder die zwei Teile der Handlingbrücke in einem Winkel, insbesondere senkrecht zu der Gassenlängsrichtung, also des Handlingbewegungspfads zu verlagern, z.B. verschieben, um diese zwischen der Arbeitsstellung und der Ruhestellung zu verstellen. In der Arbeitsstellung, also in die Gassen hineingeschoben, kann die Handlingbrücke den durchgängigen Bewegungspfad bilden. Aus dieser herausgezogen, also in der Ruhestellung, ist die Gasse für Verlagerungen der Hubvorrichtung freigegeben.

Schließlich ist es denkbar, die Handlingbrücke zum Verstellen zwischen der Arbeitsstellung und der Ruhestellung vertikal zu verlagern, sodass in der Ruhestellung die Hubvorrichtung je nach dem, ob diese zum Verstellen in die Ruhestellung angehoben oder abgesenkt wird, unter der Handlingbrücke hindurch oder über diese hinwegfahren kann, und umgekehrt zum Bilden des Bewegungspfads. Unabhängig davon kann die Handlingbrücke ortsfest oder in der Gasse beweglich ausgebildet sein, wobei zum Bilden des Bewegungspfades an unterschiedlichen Lagerplätzen der Gasse vorzugsweise ausschließlich die Bewegung in der Ebene erfolgt. Die Verlagerung, insbesondere als vertikale Bewegung, erfolgt nicht zum Transport des Stückgutes, also ausschließlich zum Verstellen zwischen der Ruhestellung und der Arbeitsstellung.

Die Aufgabe ist ferner durch ein Hochregallager mit den Merkmalen des Anspruches 9 gelöst. Das Hochregallager weist insbesondere die beschriebenen Fördermittel auf und/oder ist insbesondere dazu eingerichtet, ausgelegt, konstruiert und/oder programmiert zum Durchführen eines oben beschriebenen erfindungsgemäßen Verfahrens. Es ergeben sich die genannten Vorteile. Das Hochregallager weist insgesamt drei Fördermittel auf. Dadurch kann eine besonders flexible und schnelle Be- und Entlagerung erfolgen Außerdem können zwei sich gegenüberliegende Lagerplätze gegebenenfalls mittels der Handlingsbrücke überbrückt werden, was eine zusätzliche Flexibilität des Hochregallagers bewirkt.

Gemäß einem bevorzugten Ausführungsbeispiel des Hochregallagers wird der Handlingbewegungspfad mittels zwei Fördermitteln befahren, sodass eine schnellere und flexiblere Ein- und Auslagerung erfolgen kann.

Weitere Vorteile, Merkmale und Einzelheiten ergeben sich aus den Unteransprüchen und der nachfolgenden Beschreibung, in der - gegebenenfalls unter Bezug auf die Zeichnung - zumindest ein Ausführungsbeispiel im Einzelnen beschrieben ist. Beschriebene und/oder bildlich dargestellte Merkmale bilden für sich oder in beliebiger, sinnvoller Kombination den Gegenstand der Erfindung, gegebenenfalls auch unabhängig von den Ansprüchen, und können insbesondere zusätzlich auch Gegenstand einer oder mehrerer separaten Anmeldung/en sein. Gleiche, ähnliche und/oder funktionsgleiche Teile sind mit gleichen Bezugszeichen versehen.

Im Folgenden wird die Erfindung an Hand des in den Figuren dargestellten Ausführungsbeispiels näher erläutert. Es zeigen:
- Fig. 1: eine dreidimensionale Ansicht eines Hochregallagers von schräg vorne oben;
- Fig. 2 - 4: jeweils eine dreidimensionale Ansicht eines ersten Fördermittels des in Fig. 1 gezeigten Hochregallagers von schräg vorne oben in verschiedenen Funktionsstellungen;
- Fig. 5 + 6: jeweils eine dreidimensionale Ansicht eines zweiten Fördermittels des in Fig. 1 gezeigten Hochregallagers von schräg vorne oben in verschiedenen Funktionsstellungen;
- Fig. 7: eine dreidimensionale Ansicht von schräg vorne oben eines dritten Fördermittels des in Fig. 1 gezeigten Hochregallagers;
- Fig. 8 - 10: eine Seiten-, Drauf- und Vorderansicht des in Fig. 1 gezeigten Hochregallagers;
- Fig. 11: eine schematische Seitenansicht des ersten und zweiten Fördermittels auf einem gemeinsam genutzten Handlingbewegungspfad;
- Fig. 12: eine schematische Draufsicht des in Fig. 11 gezeigten Handlingbewegungspfades zusammen mit einer von zwei Regalreihen gebildeten Gasse und den drei in den Fig. 2 bis 7 gezeigten Fördermitteln;
- Fig. 13-20: weitere Seitenansichten des ersten und zweiten Fördermittels analog der Fig. 11 mit verschiedenen Funktionsstellungen und Funktionen des dritten Fördermittels in einer Arbeitsstellung und einer Ruhestellung; und
- Fig. 21: eine schematische Darstellung einer Gasse eines Hochregallagers mit einer ortsfesten Handlingbrücke.

### Beschreibung bevorzugter Ausführungsbeispiele

Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

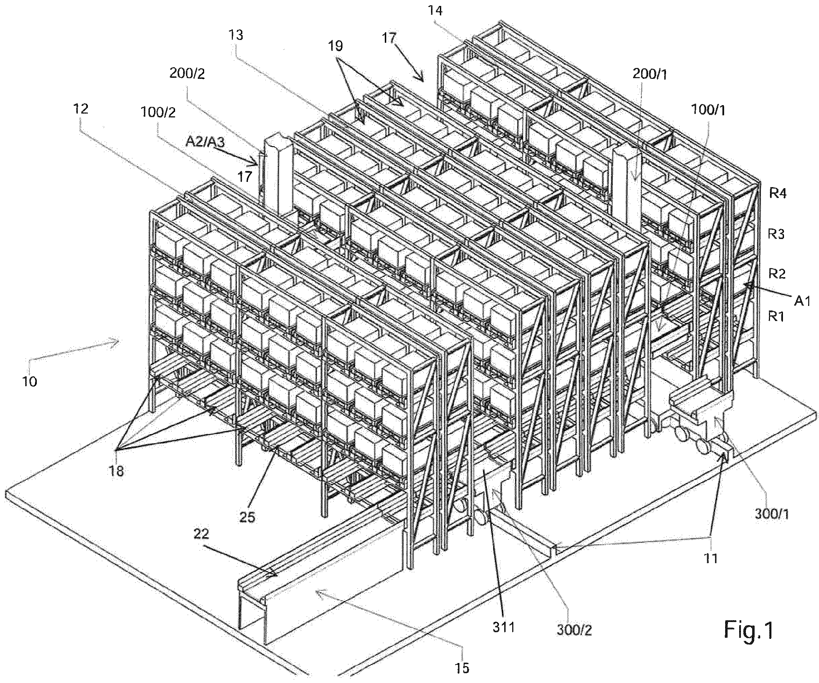

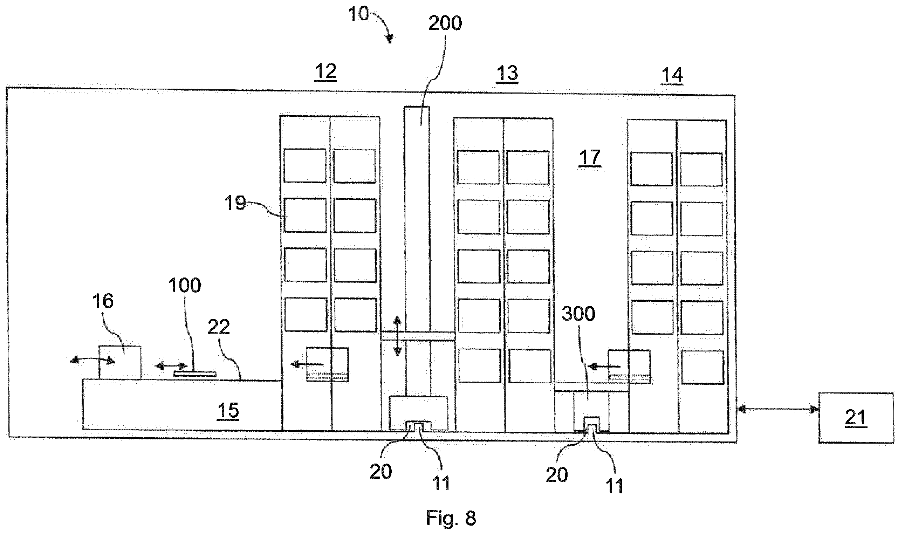

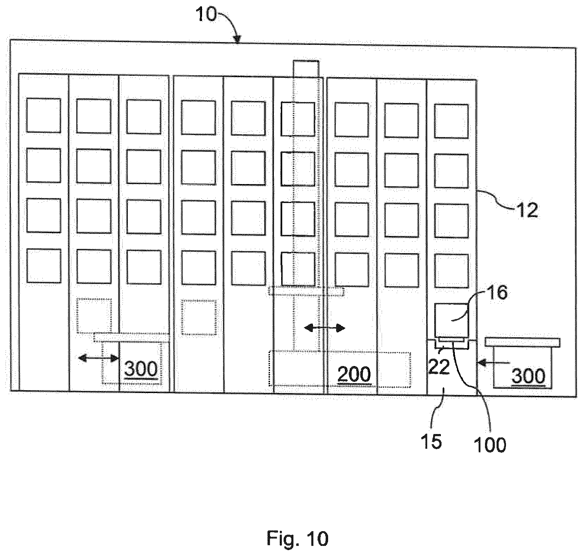

Fig. 1 zeigt ein Lagersystem 10 in einer dreidimensionalen Ansicht von schräg vorne oben. Fig. 8 bis 10 zeigen das in Fig. 1 gezeigte Lagersystem in einer Seitenansicht, einer Draufsicht und einer Vorderansicht. Im Folgenden wird auf die Fig. 1, 8, 9 und 10 gemeinsam Bezug genommen. Das Lagersystem 10 weist ein Hochregallager und eine mit den einzelnen Komponenten des Lagersystems 10 zusammenwirkende Steuerung 21 (Fig. 8) auf. Mittels der Steuerung 21 können Einlagerungs- und Auslagerungsvorgänge des Hochregallagers des Lagersystems 10 gesteuert und/oder überwacht und/oder gespeichert werden. Die Steuerung 21 ist also zum Betreiben des Lagersystems 10 eingerichtet und/oder programmiert.

Das Hochregallager weist nebeneinander angeordnet eine erste Regalreihe 12, eine zweite Regalreihe 13 und eine dritte Regalreihe 14 auf. Die erste Regalreihe 12 und die dritte Regalreihe 14 sind jeweils als Doppelregalreihen ausgelegt, weisen also jeweils eine Vielzahl von jeweils zwei hintereinander liegenden Lagerplätzen 19 auf. Die zweite Regalreihe 13 ist als Vierfachregalreihe ausgebildet, weist also jeweils vier hintereinander liegende Lagerplätze 19 auf. Zwischen der ersten Regalreihe 12 und der zweiten Regalreihe 13 sowie zwischen der zweiten Regalreihe 13 und der dritten Regalreihe 14 verbleibt je eine Gasse 17. Die Gassen 17 weisen jeweils einen horizontal entlang der Gasse 17 verlaufenden Handlingbewegungspfad 20 auf. Der Handlingbewegungspfad 20 ist als schienengebundener oder spurgeführter Handlingsbewegungspfad ausgebildet und weist dazu eine zentrale Fahrschiene 11 auf, die beidseitig sich vertikal nach oben erstreckende Flanken aufweist, an denen Räder von Fördermitteln des Lagersystems 10 abrollbar sind. Entlang des Handlingbewegungspfads 20 können also die Fördermittel linear entlang der Richtung der Gasse 17 bewegt werden. Eine entlang des Handlingbewegungspfades 20 und damit der Fahrschiene 11 verlaufende Richtung wird im Folgenden als horizontale Pickrichtung bezeichnet. Eine senkrecht dazu verlaufende, sich nach oben und unten des Hochregals erstreckende Richtung wird als vertikale Pickrichtung bezeichnet. Eine zur horizontalen und vertikalen Pickrichtung im rechten Winkel stehende Richtung wird als Auslagerungsrichtung bezeichnet. Die Auslagerungsrichtung verläuft also im rechten Winkel zu einer Ausdehnung der Regalreihen von vorne nach hinten des Hochregallagers, also im rechten Winkel durch die Regalreihen hindurch.

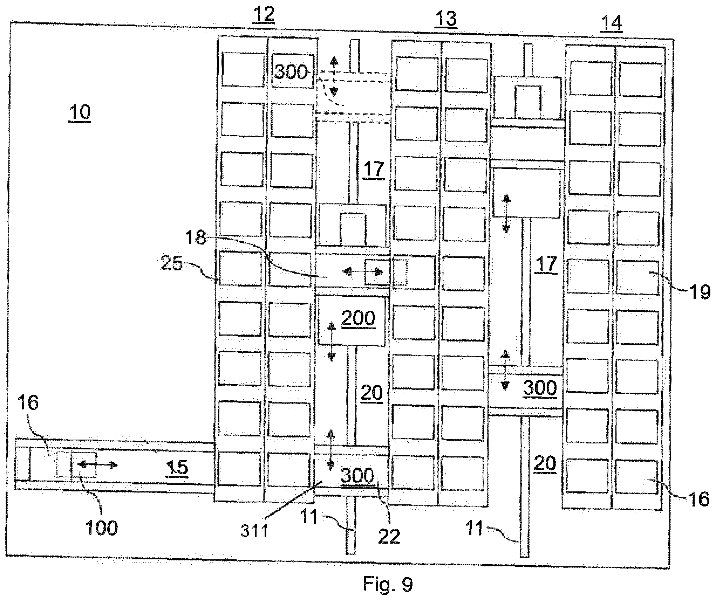

Außerdem weist das Hochregallager des Lagersystems 10 eine Vorzone mit einer Ausfahrt 15 auf. Die Vorzone dient als Handlingsfläche für in dem Hochregallager einzulagernde Stückgüter 16. Es ist denkbar, mehrere der Ausfahrten 15 auf der Vorzone vorzusehen. Die Ausfahrt 15 weist einen Bewegungspfad bzw. Ausfahrbewegungspfad 22 auf, auf dem die Stückgüter 16 zum Ein- und Auslagern gefördert werden können. Wie in Fig. 1 und 9 ersichtlich, erstreckt sich der Ausfahrbewegungspfad 22 über bzw. wird vorzugsweise gebildet durch zumindest eine Vielzahl von Lagerplatzbewegungspfaden 25 einzelner Lagerplätze 19 und zumindest einen Brückenbewegungspfad 311 einer Handlingsbrücke 304 eines dritten Fördermittels 300, 300/1, 300/2 des Hochregallagers.

Außerdem ist in Fig. 9 ersichtlich, dass zum Ein- oder Auslagern eines der Stückgüter 16 mittels einer Pickbrücke 206 einer Hubvorrichtung 210 eines zweiten Fördermittels 200, 200/1, 200/2 des Hochregallagers ein Pickbewegungspfad 18 gebildet wird. Der Pickbewegungspfad 18 setzt sich zusammen aus einem Brückenbewegungspfad 207, der Pickbrücke 206 und einem Lagerplatzbewegungspfad 25 des entsprechenden Lagerplatzes 19, auf dem das Stückgut 16 lagerbar ist.

Neben dem zweiten Fördermittel 200, 200/1, 200/2 und dem dritten Fördermittel 300, 300/1, 300/2 weist das Lagersystem 10 noch ein erstes Fördermittel 100, 100/1, 100/2 auf.

Das in den Fig. 1, 8, 9, 10 beispielhaft gezeigte Lagersystem 10 bzw. Hochregallager weist eine erste Regalebene R1, eine darüber angeordnete zweite Regalebene R2, eine darüber angeordnete dritte Regalebene R3 und als oberste eine vierte Regalebene R4 auf. Grundsätzlich können auch mehr als vier Regalebenen vorgesehen sein.

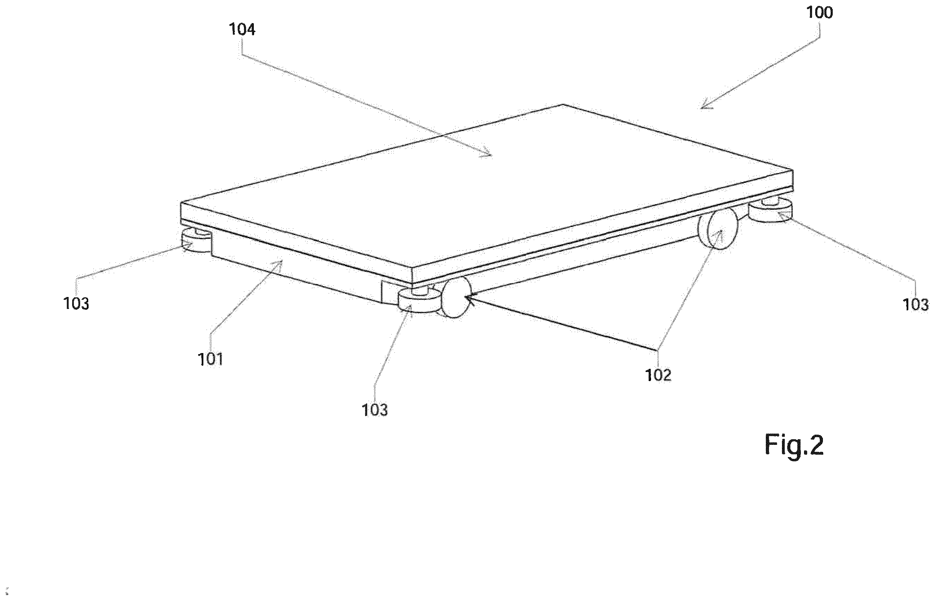

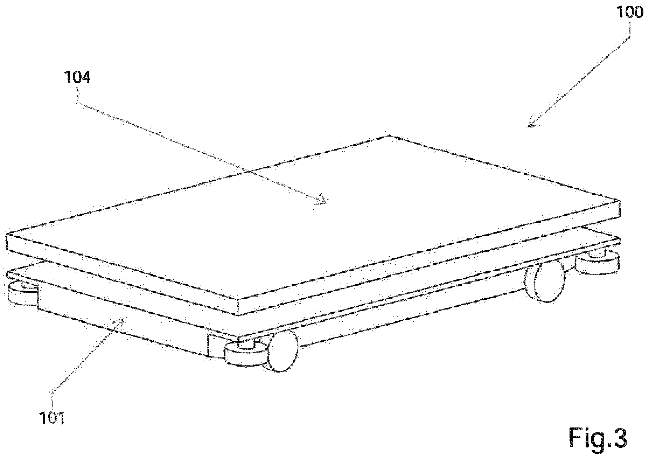

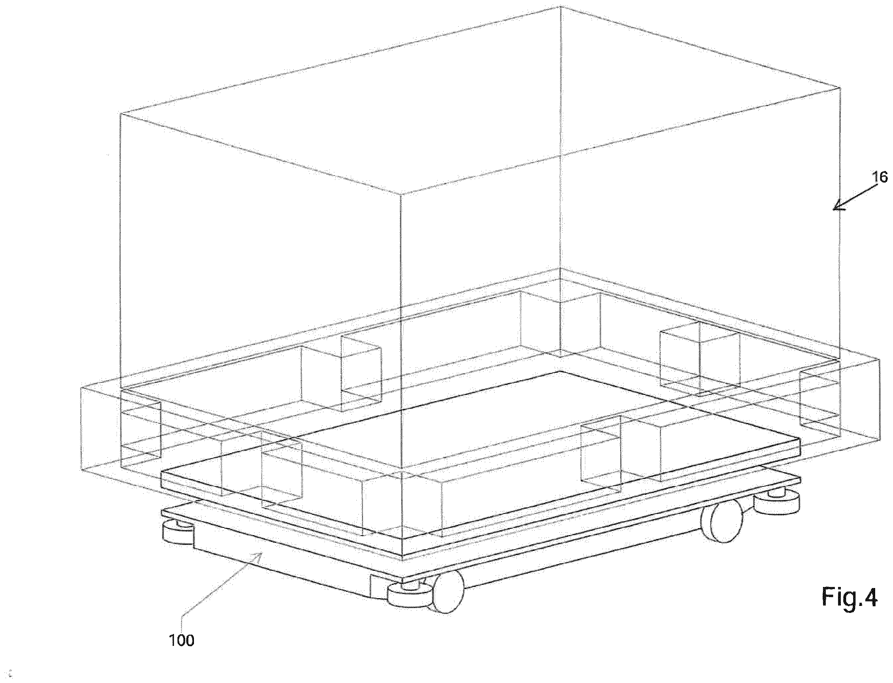

Das erste Fördermittel 100, 100/1, 100/2 wird im Folgenden an Hand der Fig. 2 bis 4 näher erläutert, die jeweils eine dreidimensionale Ansicht von schräg vorne oben des ersten Fördermittels zeigen. Das erste Fördermittel 100, 100/1, 100/2 des Lagersystems 10 weist eine Vielzahl von Satellitenfördermitteln auf, gemäß der Darstellung der Figuren beispielhaft ein erstes Satellitenfördermittel 100/1 und ein zweites Satellitenfördermittel 100/2. Die Anzahl der Satellitenfördermittel ist variierbar. Die Fig. 2 bis 4 zeigen beispielhaft eines der Satellitenfördermittel. Dieses weist einen Fahrzeugunterbau 101 mit Antriebsrädern 102 und Führungsrädern 103 auf. Oberhalb des Fahrzeugunterbaus 101 ist ein Hubtisch 104 angeordnet, der wie in Fig. 3 ersichtlich vertikal nach oben, also in Richtung der vertikalen Pickrichtung zwischen einer Hubstellung, die in Fig. 3 gezeigt ist und einer Ruhestellung, die in Fig. 2 gezeigt ist, verlagerbar ist. In Fig. 4 ist der Hubtisch 104 in seiner Hubstellung zusammen mit einer schematisiert dargestellten Palette gezeigt, auf der sich eines der Stückgüter 16 befindet. Mittels der Antriebsräder 102 kann das erste Fördermittel 100, 100/1, 100/2 entlang des Pickbewegungspfades 18, des Ausfahrbewegungspfades 22, des Lagerplatzbewegungspfades 25, des Brückenbewegungspfades 207 sowie des Brückenbewegungspfades 311 verfahren werden, also in Richtung der Auslagerungsrichtung des Lagersystems. Dazu weisen die genannten Bewegungspfade ein U-förmiges Profil auf, an dessen Seitenflanken die Führungsräder 103 zum in der Spur Halten des ersten Fördermittels 100, 100/1, 100/2 abrollen können. Bei dem in den Fig. 2 bis 4 gezeigten ersten Fördermittel 100, 100/1, 100/2 handelt es sich also um eine Vielzahl von als Unterfahrschlepper ausgebildeten Unstetigförderern.

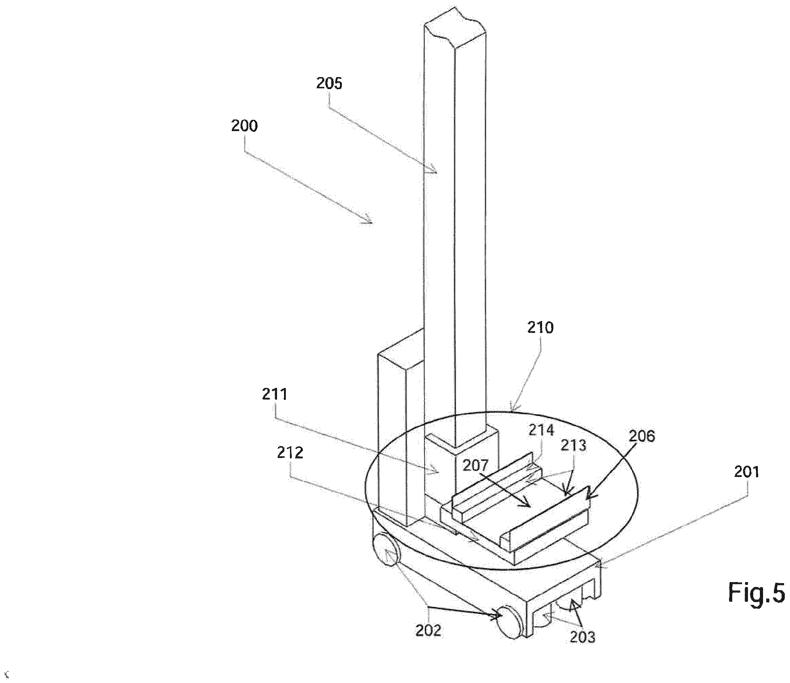

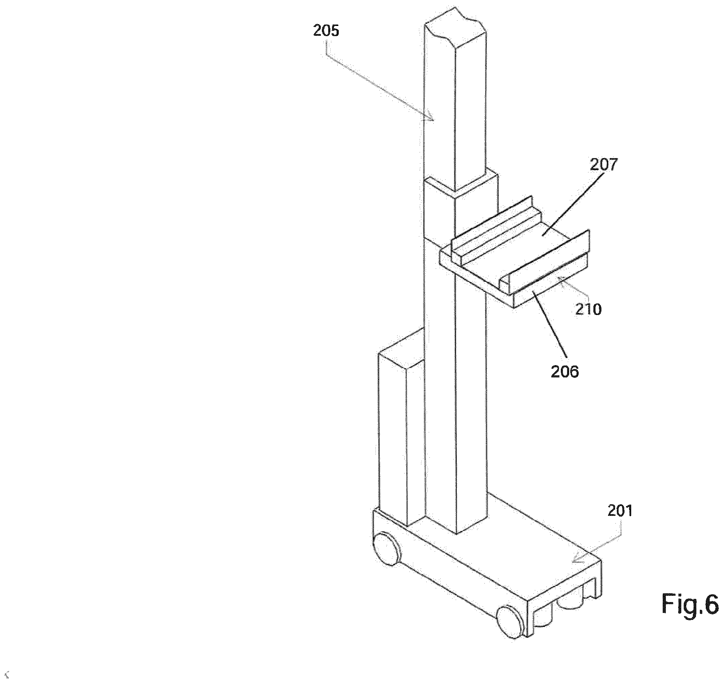

Fig. 5 und 6 zeigen beispielhaft ein Pickfördermittel des zweiten Fördermittels 200, 200/1, 200/2. Das Lagersystem 10 weist beispielhaft ein erstes Pickfördermittel 200/1 und ein zweites Pickfördermittel 200/2 auf, die jeweils eine der zwischen den Regalreihen 12 bis 14 verbleibenden Gassen 17 entlang des entsprechenden Handlingbewegungspfades 20 in der horizontalen Pickrichtung befahren. Das in Fig. 5 und 6 dargestellte Pickfördermittel 200, 200/1, 200/2 wird im Folgenden näher erläutert. Das Pickfördermittel 200, 200/1, 200/2 weist einen Fahrzeugunterbau 201 auf. Der Fahrzeugunterbau 201 weist als Antrieb Räder 202 sowie innen zentral angeordnete Führungsräder 203 auf. Die Führungsräder 203 können an den Flanken der Fahrschiene 11 spurgebend abrollen. Insbesondere ist es denkbar, dass auch die Führungsräder 203 mittels eines entsprechenden Anpressdrucks zum Bilden eines Friktionsantriebs ausgelegt sind. Alternativ oder zusätzlich können auch die Räder 202, die flurgebunden arbeiten, als Antriebsräder ausgebildet sein.

Das Pickfördermittel 200, 200/1, 200/2 weist eine Vertikalstange 205 auf. Diese erstreckt sich vertikal nach oben, also entlang der vertikalen Pickrichtung. Die Vertikalstange 205 dient als Lagerung der Hubvorrichtung 210. Dazu weist die Hubvorrichtung 210 einen U-förmigen Überhang 211 auf, der mittels eines nicht näher dargestellten Antriebes sich entlang der Längsrichtung der Vertikalstange 205 entlang der vertikalen Pickrichtung verlagern lässt. Die Hubvorrichtung 210 lässt sich also zweidimensional in der horizontalen Pickrichtung mittels des Fahrzeugunterbaus 201 und des Überhangs 211 zusammenwirkend mit der Vertikalstange 205 verlagern. Die Hubvorrichtung 210 weist eine Platte 212 auf, die einen Hubtisch bildet. An der Platte 212 sind beidseitig Fahrschienen 213 angebracht, die als Führung für die Führungsräder 103 des ersten Satellitenfördermittels 100, 100/1, 100/2 dienen können. Außerdem können die Fahrschienen 213 als Auflage zum Absetzen des Stückgutes 16 bzw. einer Palette dienen, auf der das Stückgut 16 gelagert ist, insbesondere sofern das erste Satellitenfördermittel 100, 100/1, 100/2 nicht gemeinsam mit der Hubvorrichtung 210 gefördert wird. Die Fahrschienen 213 und die Platte 212 bilden ein U-förmiges Profil, das wiederum den Brückenbewegungspfad 207 aufweist. Innerhalb des Brückenbewegungspfades 207 kann das erste Satellitenfördermittel 100, 100/1, 100/2 entlang der Auslagerungsrichtung verlagert werden. Die Pickbrücke 206 und der Brückenbewegungspfad 207 sind also vertikal zu einer Fahrtrichtung des ersten Pickfördermittels 200, 200/1, 200/2 ausgerichtet und außerdem vertikal zu einer Hubrichtung der Hubvorrichtung 210, also der vertikalen Pickrichtung.

Zusätzlich weist die Hubvorrichtung 210 Flansche 214 auf. Mittels der Flansche 214 kann ein auf der Hubvorrichtung 210 befindliches Stückgut 216 zusätzlich gegen Verrutschen oder versehentliche Verlagerungen während des Förderns geschützt werden.

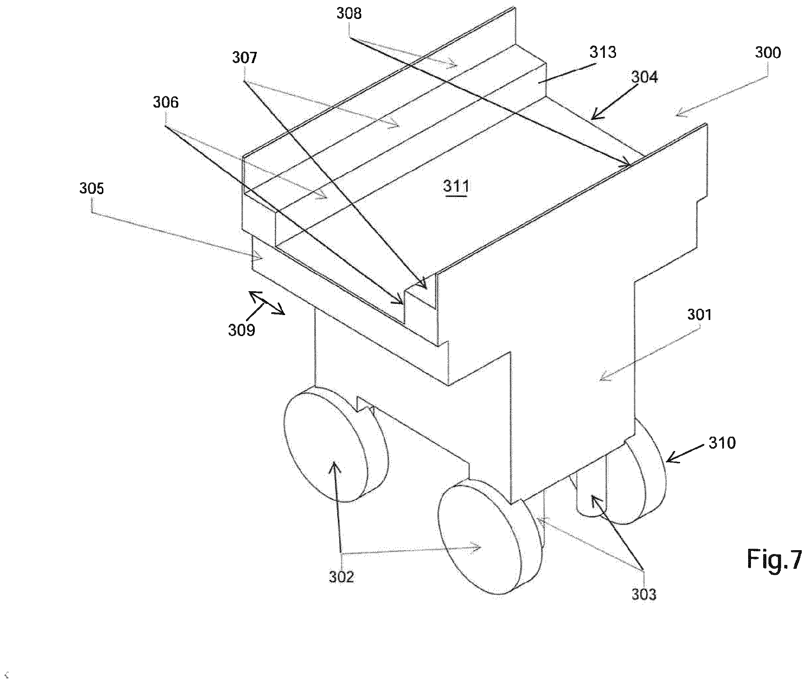

Fig. 7 zeigt eine dreidimensionale Ansicht eines dritten Fördermittels 300, 300/1, 300/2 des Lagersystems 10 von schräg vorne oben. Das dritte Fördermittel 300 umfasst zumindest eines, bevorzugt eine Vielzahl von Handlingsfördermitteln 300, 300/1, 300/2 auf, in dem in den Figuren gezeigten Beispiel ein erstes Handlingsfördermittel 300/1 und ein zweites Handlingsfördermittel 300/2. Diese befahren ebenfalls den Handlingbewegungspfad 20, nutzen also dessen Fahrschiene 11 gemeinsam mit dem zweiten Fördermittel 200, 200/1, 200/2. Wie in den Figuren dargestellt, ist in jeder Gasse 17 ein erstes Pickfördermittel 200, 200/1, 200/2 und ein zweites Handlingsfördermittel 300, 300/1, 300/2 vorgesehen. Es ist jedoch auch denkbar, pro Gasse 17 mehrere der Handlingsfördermittel 300, 300/1, 300/2 vorzusehen, wie dies z.B. in Fig. 9 in einer der Gassen 17 mittels eines gestrichelt dargestellten weiteren Handlingsfördermittels 300, 300/1, 300/2 gezeigt ist.

Das in Fig. 7 dargestellte Handlingsfördermittel 300, 300/1, 300/2 weist einen Fahrzeugunterbau 301 mit Antriebsrädern 302 und senkrecht zu diesen abrollenden Führungsrädern 303 auf. Die Führungsräder 303 können analog der Führungsräder 203 des Pickfördermittels 200, 200/1, 200/2 an der gemeinsam genutzten Fahrschiene 11 des jeweiligen Handlingbewegungspfades 20 der jeweiligen Gasse 17 spurführungsgebend abrollen. Analog können diese entweder lediglich zur Spurführung und/oder zum Antrieb genutzt werden. Gegebenenfalls kann dann auf einen Antrieb der Antriebsräder 302 verzichtet werden oder zusätzlich ein Antrieb erfolgen.

Außerdem weist das dritte Fördermittel 300, 300/1, 300/2 eine Platte 305 auf. Auf der Platte 305 können die Antriebsräder 102 des ersten Satellitenfördermittels 100, 100/2, 100/2 abrollen. Auf der Platte 305 ist beidseitig jeweils ein erstes L-Profil 306 angeordnet. Die ersten L-Profile 306 sind auf einem Grund eines U-Profils 308 montiert. Das U-Profil 308 ist wiederum auf der Platte 305 des ersten Handlingsfördermittels 300, 300/1, 300/2 montiert. An Innenseiten der Flanken des U-Profils 308 ist beidseitig jeweils ein zweites L-Profil 307 montiert. Mittels des U-Profils 308 und der jeweils beidseitig montierten L-Profile 306 und 307 wird innerhalb des U-Profils 308 beidseitig jeweils eine Stufe gebildet, an deren vertikalen Flanken die Führungsräder 103 des ersten Satellitenführungsmittels 100, 100/1, 100/2 abrollen und an deren horizontalen Flanken, die von den zweiten L-Profilen 307 gebildet werden, können die Stückgüter 16 abgestellt werden. Die Stufe ist höher als eine Höhe des ersten Satellitenfördermittels 100, 100/1, 100/2 mit abgesenktem Hubtisch 104. Dadurch kann ein auf der Stufe gelagertes Stückgut 16 unterfahren werden. Der Fahrzeugunterbau 301 weist ein die Antriebsräder 302 und Führungsräder 303 aufweisendes Fahrwerk 310 auf, das eine flurgebundene Bewegung des dritten Handlingsfördermittels 300, 300/1, 300/2 entlang einer Fahrtrichtung 309 ermöglicht. Gemäß dem Aufbau des Lagersystems 10 bzw. des Hochregallagers entspricht die Fahrtrichtung 309 des Fahrwerks 310 des Handlingsfördermittels 300, 300/1, 300/2 der horizontalen Pickrichtung. Der von den L-Profilen 306 und 307 und dem U-Profil 308 gebildete Brückenbewegungspfad 311, also die Handlingsbrücke 304, ist im rechten Winkel zu der Fahrtrichtung 309 und damit zu der horizontalen Pickrichtung ausgerichtet.

Die L-Profile 306 und 307 sowie das U-Profil 308 bilden eine Führungsschiene 313 des Brückenbewegungspfades 311. An der Führungsschiene 313 können die Führungsräder 103 des Satellitenfördermittels 100, 100/1, 100/2 abrollen. Jeder der Lagerplätze 19, die Pickbrücke 206 und die Handlingsbrücke 304 sind analog ausgebildet, weisen also jeweils einen analog ausgebildeten Bewegungspfad auf, der jeweils in der Auslagerungsrichtung, also vorzugsweise im rechten Winkel zu der horizontalen Pickrichtung, ausgerichtet ist.

Im Folgenden wird beispielhaft zum Erläutern eines Betriebsverfahrens des Lagersystems 10 ein einzelnes Arbeitsspiel zum Auslagern und Kommissionieren von drei einzelnen Stückgütern 16 beschrieben, die im Folgenden mit A1, A2 und A3 bezeichnet werden.

Das Stückgut A1 befindet sich in der 3. Regalreihe 14 und die Stückgüter A2 und A3 in der zweiten Regalreihe 13 und sollen von dort ausgelagert werden, also in einer gewünschten Reihenfolge auf die Ausfahrt 15 des Hochregallager des Lagersystems 10 gefördert werden.

Die Förderung von A1, A2, A3 erfolgt mittels den Fördermitteln 100, 100/1, 100/2, 200, 200/1, 200/2, 300, 300/1, 300/1 des Hochregallagers des Lagersystems 10. A1, A2, A3 sind gegebenenfalls auf Paletten in unterschiedlichen Lagerplätzen 19 auf unterschiedlichen Regalebenen R2 bis R4 angeordnet. Im vorliegenden Beispiel wird die erste Regalebene R1 ausschließlich als Pufferebene verwendet, weist also ausschließlich Pufferlagerplätze auf, die analog der Lagerplätze 19 der übrigen Regalebenen aufgebaut sein können bzw. bevorzugt sind. Grundsätzlich kann aber jeder freie Lagerplatz 19 im Lagersystem 10 als Pufferlagerplatz verwendet werden. Konkret ist A1 in der zweiten Regalebene R2 in der dritten Regalreihe 14, A2 in der vierten Regalebene R4 der zweiten Regalreihe 13 und A3 in der dritten Regalebene R3 der zweiten Regalreihe 13 gelagert. Im Folgenden wird erläutert, wie diese in der Reihenfolge A1, A2, A3 auf einem kürzesten Weg zu dem Zielpunkt gefördert werden können, also auf die Ausfahrt 15.

Zunächst befindet sich das erste Satellitenfördermittel 100/1 auf der Hubvorrichtung 210 des ersten Pickfördermittels 200/1. Die Hubvorrichtung wird zu dem Lagerplatz 19 von A1 bewegt. Das zweite Satellitenfördermittel 100/2 befindet sich auf der Hubvorrichtung 210 des zweiten Pickfördermittels 200/2, das zu dem Lagerplatz 19 von A3 gefördert wird. Da A1 ganz am Ende der dritten Regalreihe 14 eingelagert ist, verlässt das erste Handlingsfördermittel 300/1 die entsprechende Gasse 17 und gibt diese dem ersten Pickfördermittel 200/1 frei. Das zweite Handlingsfördermittel 300/2 befindet sich innerhalb der Gasse 17, da A3 ungefähr mittig in der zweiten Regalreihe 13 eingelagert ist, bewegt sich jedoch so, dass eine Kollision sicher vermieden werden kann. Anschließend verlassen das erste Satellitenfördermittel 100/1 und das zweite Satellitenfördermittel 100/2 die jeweilige Pickbrücke 206 und unterfahren A1 und A3. Nach dem Unterfahren von A1 und A3 werden diese mittels der Hubtische von dem ersten Satellitenfördermittel 100/1 und dem zweiten Satellitenfördermittel 100/2 übernommen und entlang der so gebildeten Pickbewegungspfade 18 jeweils auf die entsprechende Pickbrücke 206 gefördert. Anschließend senkt das erste Pickfördermittel 200/1 seinen Hubtisch zusammen mit dem ersten Satellitenfördermittel 100/1 und A1 zur ersten Regalebene R1 ab, wobei das zweite Handlingsfördermittel 300/2 innerhalb der Gasse 17 bereits den Ausfahrbewegungspfad 22 gebildet hat. Zeitgleich bewegt sich das zweite Pickfördermittel 200/2 bzw. die Pickbrücke 206 zusammen mit dem zweiten Satellitenfördermittel 100/2 und A3 ebenfalls in die erste Regalebene R1 in dieselbe Regalreihe, in der zuvor A3 gelagert war.

Anschließend verlässt das erste Satellitenfördermittel 100/1 mit A1 die Hubvorrichtung des ersten Pickfördermittels 200/1 und fährt entlang des Ausfahrbewegungspfades 22 der ersten Regalebene R1 über das zweite Handlingsfördermittel 300/2 Richtung Ausfahrt 15. Das erste Satellitenfördermittel 100/1 fährt also mit A1 entlang des Ausfahrbewegungspfads 22 in Richtung zum zweiten Handlingsfördermittel 300/2. Das erste Pickfördermittel 200/1 ist für diese Aufgabe nicht mehr notwendig. Mit einer Fahrt zwischen der zweiten Regalreihe 13 und dritten Regalreihe 14 kann das erste Pickfördermittel 200/1 bereits mit dem Erfüllen einer anderen Aufgabe des Lagersystems 10 bzw. des Hochregallagers beginnen. Das erste Handlingsfördermittel 300/1 verlagert sich und überbrückt nun die zwischen der zweiten Regalreihe 13 und dritten Regalreihe 14 verbleibende Gasse 17 und verlängert dadurch den Ausfahrbewegungspfad 22 durch das gesamte Hochregallager. Zeitgleich verlässt das zweite Satellitenfördermittel 100/2, nachdem es diese wieder abgesenkt hat, A3 in der ersten Regalebene R1 der zweiten Regalreihe 13 und fährt im leeren Zustand, d.h. ohne Palette und/oder Stückgut 16, auf die Hubvorrichtung 210 bzw. die Pickbrücke 206 des zweiten Handlingsfördermittels 300/2. Das zweite Handlingsfördermittel 300/2 fährt anschließend in seiner Gasse 17 und hebt zeitgleich die Pickbrücke 206 zusammen mit dem zweiten Satellitenfördermittel 100/2 zum Lagerplatz 19, an dem A2 gelagert ist, also in die vierte Regalebene R4 der zweiten Regalreihe 13. Vorteilhaft durchquert währenddessen das erste Satellitenfördermittel 100/1 über das zweite Handlingsfördermittel 300/2 das Lagersystem, bewegt sich also auf dem Ausfahrbewegungspfad 22 auf die Ausfahrt 15. Dort senkt das erste Satellitenfördermittel 100/1 seinen Hubtisch 104 ab und stellt damit A1 auf der Ausfahrt 15 bereit. Zeitgleich übernimmt das zweite Satellitenfördermittel 100/2 A2 in der zweiten Regalreihe 13 und fährt A2 entlang des so gebildeten Pickbewegungspfads 18 auf die Pickbrücke 206 des zweiten Pickfördermittels 200/2.

Das leere erste Satellitenfördermittel 100/1, das gerade A1 beim Zielpunkt abgestellt hat, verlässt die Ausfahrt 15 wieder entlang des Ausfahrbewegungspfads 22 über das zweite Handlingsfördermittel 300/2 und fährt zur zweiten Regalreihe 13. Das zweite Pickfördermittel 200/2 bewegt sich entlang des Handlingbewegungspfades 20 in Richtung des Ausfahrbewegungspfades 22, wobei es zeitgleich seine Hubvorrichtung 210 in die erste Regalebene R1 absenkt.

Im weiteren Verlauf des Arbeitsspiels wird das erste Satellitenfördermittel 100/1 zurück in die zweite Regalreihe 13, also über das erste Handlingsfördermittel 300/1 gefahren, also über die entsprechende Gasse 17 hinweg. Das zweite Handlingsfördermittel 300/2 weicht aus, verlässt die Gasse 17, um dem zweiten Pickfördermittel 200/2 zwischen der ersten Regalreihe 12 und der zweiten Regalreihe 13 Raum freizugeben. Das zweite Pickfördermittel 200/2 hat zwischenzeitlich das zweite Satellitenfördermittel 100/2 zusammen mit A2 zu dem Ausfahrbewegungspfad 22 gefördert. Der Ausfahrbewegungspfad 22 wird anstelle mit einer der ersten oder zweiten Handlingsfördermittel 300/1, 300/2 nun mithilfe der Pickbrücke 206 vom zweiten Pickfördermittel 200/2 vervollständigt.

Besonders vorteilhaft hat zwischenzeitlich das erste Handlingsfördermittel 300/1 das leere erste Satellitenfördermittel 100/1 in der zwischen der zweiten Regalreihe 13 und der dritten Regalreihe 14 verbleibenden Gasse 17 zu einer Linie gefördert, auf der A3 gepuffert ist, also auf einem Pufferlagerplatz 19 der ersten Regalebene R1. Unter einer Linie kann eine sich über die Gassen 17, also in Auslagerungsrichtung erstreckende Reihe von Lagerplätzen 19 und/oder ein durch eine Brücke vervollständigter Bewegungspfad, der parallel zu dem Ausfahrbewegungspfad verläuft, insbesondere in derselben Regalebene wie der Ausfahrbewegungspfad, und/oder ein Pufferbewegungspfad verstanden werden. Zeitgleich hat das zweite Satellitenfördermittel 100/2 A2 über den Ausfahrbewegungspfad 22 zu der Ausfahrt 15 geliefert und abgestellt. Das zweite Pickfördermittel 200/2 ist im weiteren Verlauf dieses Arbeitsspiels ebenfalls nicht mehr notwendig und verlässt gegebenenfalls das Lagersystem 10 oder den für das Arbeitsspiel notwendigen Teil des Lagersystems 10 und kann sich gegebenenfalls weiteren Pickvorgängen widmen. Außerdem überbrückt das zweite Handlingsfördermittel 300/2 die erste Regalreihe 12 und die zweite Regalreihe 13 und bildet wieder den Ausfahrbewegungspfad 22. Über diesen fährt nun das leere erste Satellitenfördermittel 100/1 zurück in die erste Regalebene R1 mit dem Ziel, A3 zu unterfahren. Außerdem bewegt sich zeitgleich das leere zweite Satellitenfördermittel 100/2 von der Ausfahrt 15 entlang des Ausfahrbewegungspfads 22 über das zweite Handlingsfördermittel 300/2 hinweg. Das zweite Pickfördermittel 200/2 ist ausgewichen oder beginnt mit anderen Aufgaben.

Das erste Satellitenfördermittel 100/1 unterfährt zielgemäß A3 und nimmt A3 mit. Das zweite Satellitenfördermittel 100/2 quert die Gasse 17 über das zweite Handlingsfördermittel 300/2 und fährt in die zweite Regalreihe 13 ein. Das zweite Handlingsfördermittel 300/2 bewegt sich nach der Freigabe von dem zweiten Satellitenfördermittel 100/2, also nachdem dieses überfahren wurde, zu dem Pufferlagerplatz 19 in der ersten Regalebene R1, an dem A3 gelagert ist. Außerdem fährt das erste Handlingsfördermittel 300/1 zurück, um den Ausfahrbewegungspfad 22 wieder zu bilden und um das sich auf diesem in der zweiten Regalreihe 13 bewegende zweite Satellitenfördermittel 100/2 wieder aufzunehmen.

Es ist ersichtlich, dass in diesem Teil des Arbeitsspiels vorteilhaft das erste Pickfördermittel 200/1 und das zweite Pickfördermittel 200/2 nicht mehr benötigt werden. In diesem Teil des Arbeitsspiels wird der restliche Auslagerungsvorgang lediglich mittels des ersten Satellitenfördermittels 100/1, des zweiten Satellitenfördermittels 100/2, des ersten Handlingsfördermittels 300/1 und/oder des zweiten Handlingsfördermittels 300/2 fortgeführt. Dadurch kann der Durchsatz wesentlich vergrößert werden. Das erste Satellitenfördermittel 100/1 fährt zusammen mit A3 auf das zweite Handlingsfördermittel 300/2 und das leere zweite Satellitenfördermittel 100/2 fährt auf das erste Handlingsfördermittel 300/1.

Vorteilhaft wird nun bereits als Teil eines weiteren Arbeitsspiels das erste Handlingsfördermittel 300/1 zusammen mit dem ersten Satellitenfördermittel 100/1 zu einem weiteren Pufferlagerplatz 19 gefahren. Als Teil des Arbeitsspiels liefert das zweite Handlingsfördermittel 300/2 das erste Satellitenfördermittel 100/1 zusammen mit A3 zu dem Ausfahrbewegungspfad 22 bzw. vervollständigt diesen damit. Anschließend verlässt das erste Satellitenfördermittel 100/1 das zweite Handlingsfördermittel 300/2 entlang des Ausfahrbewegungspfades 22 in Richtung der Ausfahrt 15 und liefert damit A3 auf der Ausfahrt 15 an. Anschließend senkt das erste Satellitenfördermittel 100/1 A3 ab und fährt entlang des Ausfahrbewegungspfads 22 zurück in die erste Regalebene R1 und steht dort für das nächste Arbeitsspiel zur Verfügung. Im Ergebnis sind A1, A2, A3 in der vorgeschriebenen Reihenfolge auf kürzestem Weg durch die Fördermittel 100, 100/1, 100/2, 200, 200/1, 200/2, 300, 300/1, 300/2 des Hochregallagers des Lagersystems 10 auf der Ausfahrt 15 bereitgestellt und können von dort mittels nicht näher dargestellten Fördermitteln übernommen werden, z.B. von Staplern oder Ähnlichem.

Das beschriebene Arbeitsspiel ist beispielhaft und kann auch für eine Einlagerung in umgekehrter Reihenfolge angewendet werden. Außerdem ist die dargestellte Anzahl an Regalreihen, deren Höhe, Breite und Tiefe beispielhaft.

Zusammenfassend wird bei dem erfindungsgemäßen Verfahren zumindest mithilfe der Pick-brücke 206 des zweiten Fördermittels 200, 200/1, 200/2 und/oder mittels der Handlingbrücke des dritten Fördermittels 300, 300/1, 300/2 zumindest ein entlang der horizontalen Pickrichtung verlaufender Bewegungspfad gebildet, insbesondere der Pickbewegungspfad 20, der Ausfahrbewegungspfad 22 und/oder ein Pufferbewegungspfad zum optionalen Puffern der Stückgüter 16. Die durch Überbrücken entstehenden Bewegungspfade verlaufen alle entlang der Auslagerungsrichtung.

Der Pufferbewegungspfad verläuft innerhalb derselben Ebene wie der Ausfahrbewegungspfad und parallel zu diesem. Außerdem wird erfindungsgemäß zumindest eine der Gassen 17 so überbrückt, dass sich dadurch der Ausfahrbewegungspfad 22 ergibt, wobei die Stückgüter 16 auf dem Ausfahrbewegungspfad 22 zwischen der Ausfahrt 15 und dem übrigen Lagersystem 10 förderbar sind. Zudem kann optional der Ausfahrbewegungspfad 22 mithilfe des dritten Fördermittels 300, 300/1, 300/2 gebildet werden.

Außerdem können damit an einer beliebigen Stelle die Gassen 17 zu Bewegungspfaden entlang der Auslagerungsrichtung verbunden werden, z.B. für Leertransporte des ersten Fördermittels 100, 100/1, 100/2. Vorteilhaft bewegt dieses sich dadurch entlang der Auslagerungsrichtung innerhalb der ersten Regalebene R1 unabhängig von einem Lagerzustand der ersten Regalebene R1, da gegebenenfalls vorhandene Stückgüter 16 auf entsprechenden Pufferlagerplätzen bzw. Lagerplätzen 19 beliebig unterfahren werden können.

Es ist also ersichtlich, dass vorteilhaft das erste Fördermittel 100, 100/1, 100/2 durch die Handlingsbrücken 304 und/oder die Pickbrücken 206 des dritten Fördermittels 300, 300/1, 300/2 bzw. zweiten Fördermittels 200, 200/1, 200/2 sich auf beliebige Lagerplätze 19 der ersten Regalebene R1 bewegen kann/können. Dadurch kann eine sehr effiziente Pufferung und/oder Kommissionierung der Stückgüter 16 erfolgen. Das Verlagern des ersten Fördermittels 100, 100/1, 100/2 in der Auslagerungsrichtung erfolgt dazu, wie beschrieben, unabhängig von einer Belegung der entsprechenden Pufferlagerplätze bzw. Lagerplätze 19, da gegebenenfalls dort gelagerte Stückgüter 16 unterfahren und dadurch passiert werden können. Eine Verlagerung in der horizontalen Pickrichtung kann mittels der Brücken, also der Pick-Brücke 206 und/oder der Handlingsbrücke 304, erfolgen.

Außerdem ist ersichtlich, dass optional durch das erste Fördermittel 100, 100/1, 100/2 und das dritte Fördermittel 300, 300/1, 300/2 die erste Regalebene R1 ohne Zuhilfenahme des zweiten Fördermittels 200, 200/1, 200/2 bedient werden kann. Es ist ersichtlich, dass bezüglich der ersten Regalebene R1 eine redundante Möglichkeit zur Förderung der Stückgüter 16 und damit insbesondere zu deren Pufferung geschaffen wurde, nämlich durch das Vorsehen des zweiten Fördermittels 200, 200/1, 200/2 und des dritten Fördermittels 300, 300/1, 300/2, die sich gemeinsam jeweils auf einem der Handlingbewegungspfade 20 bewegen. Das Lagersystem 10 hat also zumindest eine redundant bedienbare Regalebene, vorliegend die erste Regalebene R1.

Gemäß einer Alternative ist es möglich, eine beliebige der Regalebenen als Pufferebene vorzusehen, auf der sich das dritte Fördermittel 300, 300/1, 300/2 entlang der Auslagerungsrichtung und der horizontalen Pickrichtung bewegen kann. Dabei ist es z.B. möglich, ein sich von einer Bedienebene bzw. Übernahmeebene aus nach unten erstreckendes Lager zu ermöglichen, z.B. ein sich in ein Kellergeschoss erstreckendes. In diesem Fall ist es auch möglich, dass der Handlingbewegungspfad 20 unterschiedliche Fahrschienen 11 aufweist, z.B. eine für das zweite Fördermittel 200, 200/1, 200/2 und eine für das dritte Fördermittel 300, 300/1, 300/2, wobei diese parallel räumlich übereinander beabstandet zueinander angeordnet sein können. Konkret kann das zweite Fördermittel 200, 200/1, 200/2 auf einer untersten Ebene und z.B. das dritte Fördermittel 300, 300/1, 300/2 auf einer obersten bzw. Entnahme- bzw. Pufferebene betrieben werden. Die Fahrschiene 11 für das dritte Fördermittel 300, 300/1, 300/2 kann z.B. mithilfe von zurückgesetzten Nuten realisiert werden. Insbesondere ist es vorteilhaft möglich, eine mittlere der Regalebenen als Pufferebene zu verwenden, sodass diese noch schneller und effizienter angesteuert werden kann, da ein Verfahrweg in der vertikalen Pickrichtung beidseitig auf die Pufferebene zu möglich ist und damit deutlich verringert werden kann.

Die Steuerung 21 kann kabelgebunden, zumindest teilweise kabelgebunden, via Funkstrecken und/oder ähnlichen Vorrichtungen zum Datenaustausch aufgebaut sein. Außerdem kann diese entsprechende Rechenmittel zum Berechnen von Positionen und/oder Fahrwegen aufweisen. Insbesondere kann diese sämtliche Bewegungen der im Lagersystem 10 vorhandenen Fördermittel koordinieren.

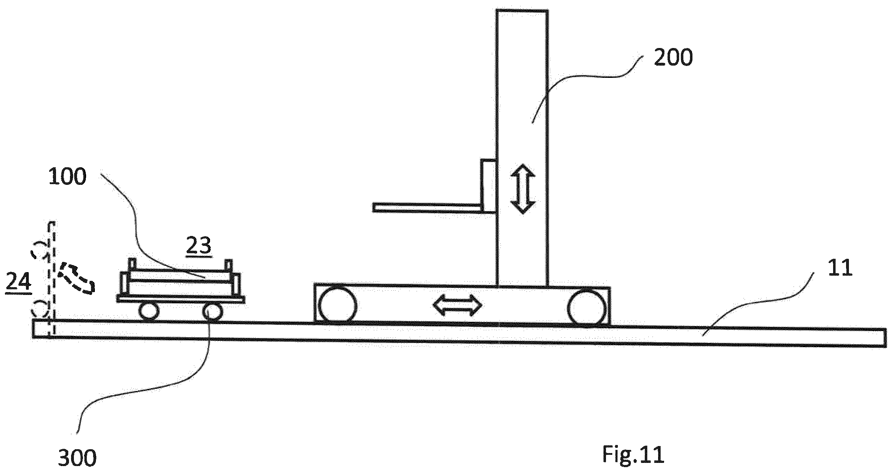

Fig. 11 zeigt eine Seitenansicht der Fahrschiene 11 des Handlingbewegungspfades 20 zusammen mit dem ersten Fördermittel 100, 100/1, 100/2 und dem zweiten Fördermittel 200, 200/1, 200/2. Mittels Doppelpfeilen ist die Verfahrbarkeit des zweiten Fördermittels 200, 200/1, 200/2 entlang der horizontalen Pickrichtung und der vertikalen Pickrichtung angedeutet. Das erste Fördermittel 100, 100/1, 100/2 befindet sich auf dem dritten Fördermittel 300, 300/1, 300/2. Gestrichelt ist angedeutet, dass das dritte Fördermittel 300, 300/1, 300/2 von einer Arbeitsstellung 23, die in Fig. 11 fett eingezeichnet ist, in eine Ruhestellung 24, die in Fig. 11 gestrichelt gezeichnet ist, verstellt werden kann und wieder zurück. In der Ruhestellung 24, die in einer Parkposition außerhalb der Gasse 17 eingenommen werden kann, weist das dritte Fördermittel 300, 300/1, 300/2 einen verringerten Raumbedarf auf, sodass an den Enden der Gassen 17 möglichst wenig, gegebenenfalls kein zusätzlicher Raum benötigt wird. Damit steht dieser Raum bedarfsweise dem zweiten Fördermittel 200, 200/1, 200/2 zur Verfügung. Das Aufstellen erfolgt durch einen geeigneten Antrieb, insbesondere eigenen Antrieb und/oder Gelenkmechanik und/oder eine Zwangsführung, die beim Erreichen eines Endes der Gasse eingreift und das erste Fördermittel verstellt.

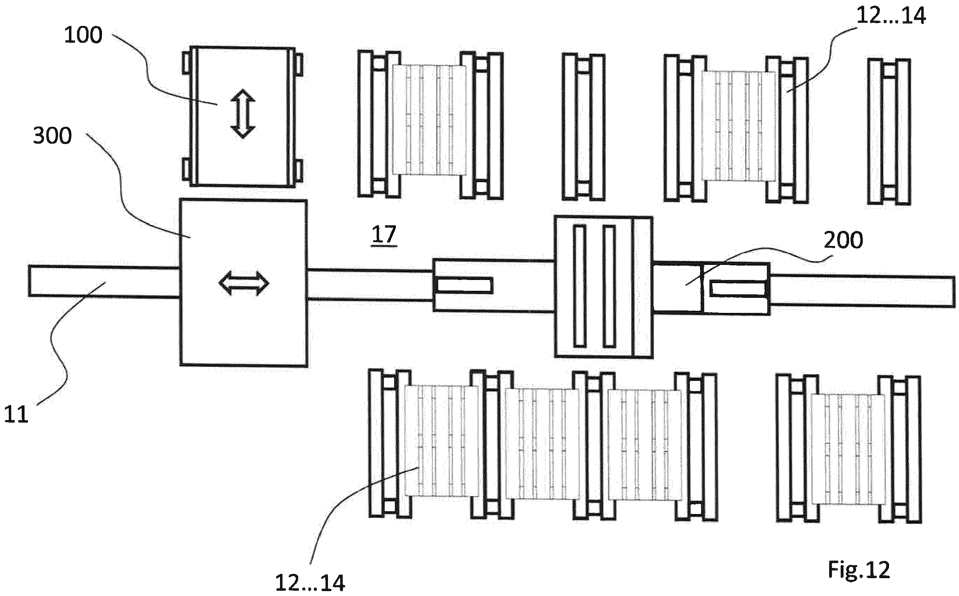

Fig. 12 zeigt eine Draufsicht auf den in Fig. 11 dargestellten Handlingbewegungspfad 20 zusammen mit der Fahrschiene 11 und zwei der Regalreihen 12 bis 14, die die Gasse 17 bilden. Mittels Doppelpfeilen ist einerseits die Beweglichkeit des dritten Fördermittels 300, 300/1, 300/2 entlang der horizontalen Pickrichtung und andererseits die orthogonal dazu vorgesehene Verlagerbarkeit des ersten Fördermittels 100, 100/1, 100/2 entlang der Auslagerungsrichtung symbolisiert.

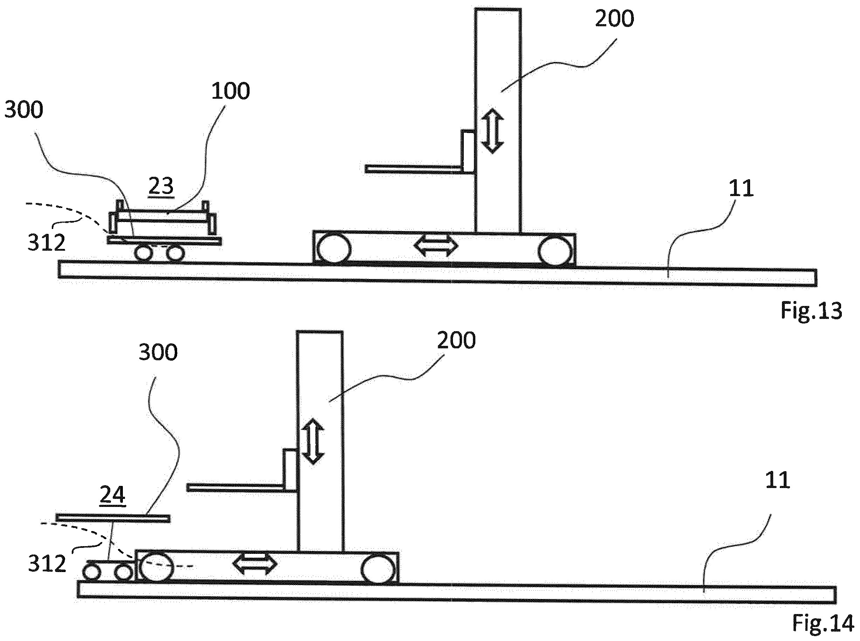

Die Fig. 13 bis 20 zeigen jeweils unterschiedliche Möglichkeiten zum Herstellen der Arbeitsstellung 23 und Ruhestellung 24 des dritten Fördermittels 300, 300/1, 300/2.

Fig. 13 zeigt das dritte Fördermittel 300, 300/1, 300/2 in der Arbeitsstellung 23. Im Vergleich dazu zeigt Fig. 14 die Ruhestellung 24. Dazu weist der Fahrzeugunterbau 301 einen Rücksprung auf, also einen vergleichsweise geringen Radstand, wobei die Handlingsbrücke 304 relativ zu dem Fahrzeugunterbau 301 mittels einer geeigneten Hubvorrichtung derartig anhebbar ist, dass die Handlingbrücke 304 über eine räumliche Ausdehnung des Fahrzeugunterbaus 201 des zweiten Fördermittels 200, 200/1, 200/2 anhebbar ist. Es ist ersichtlich, dass dadurch der Fahrzeugunterbau 201 raumsparend unter dem Rücksprung des dritten Fördermittels 300, 300/1, 300/2 fahrbar ist. Vorteilhaft wird dadurch ein Raum am Ende der Gasse 17 eingespart.

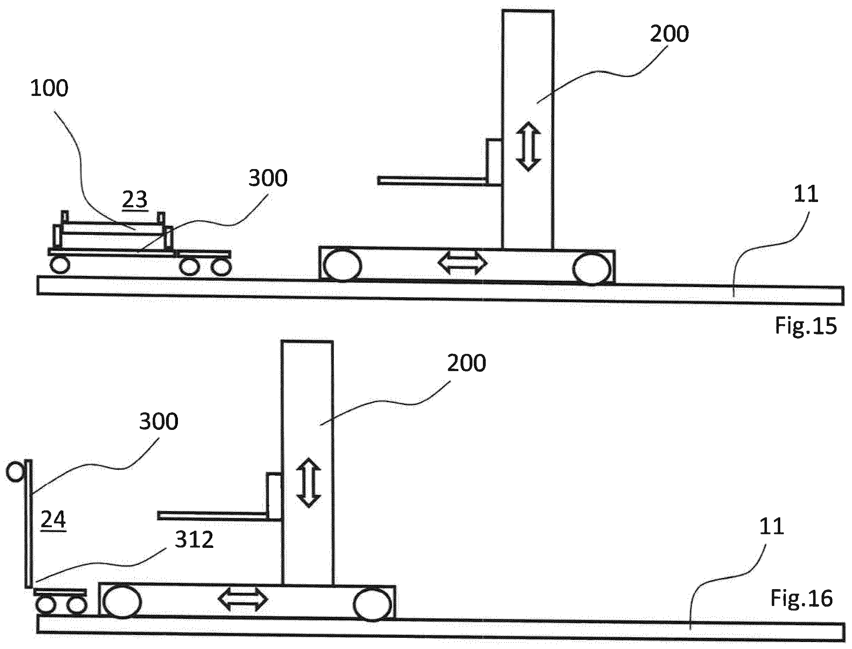

Fig. 15 zeigt eine weitere Ausführungsform des dritten Fördermittels 300, 300/1, 300/2 in der Arbeitsstellung 23. Im Vergleich dazu zeigt Fig. 16 dieses in seiner Ruhestellung 24. Dazu ist ein Teil des dritten Fördermittels 300, 300/1, 300/2 bzw. die Platte 305 zweigeteilt und kann vertikal nach oben geklappt werden. Die Platte 305 ist derartig ausgestaltet, dass ein erster Teil die Handlingbrücke 304 trägt und ein zweiter Teil ein Zusatzfahrwerk aufweist, mit dem das dritte Fördermittel 300, 300/1, 300/2 auch in der Ruhestellung 24 verfahrbar ist. Konkret weist der kleinere verbleibende Teil der abklappbaren Platte 305 zwei Achsen und der grö-ßere, die Handlingbrücke 304 aufnehmende Teil der Platte 305 eine Achse auf.

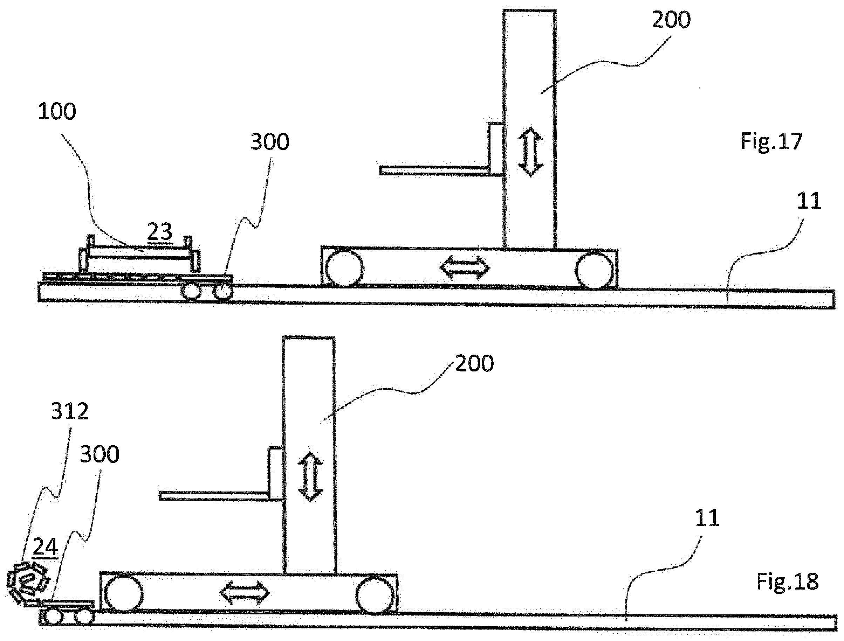

Fig. 17 zeigt ein weiteres Ausführungsbeispiel eines dritten Fördermittels 300, 300/1, 300/2 in der Arbeitsstellung 23. Im Vergleich dazu zeigt Fig. 18 dieses in seiner Ruhestellung 24. Zum Erreichen der Ruhestellung 24 ist die Platte 305 des dritten Fördermittels 300, 300/1, 300/2 in eine Vielzahl von Streifen segmentiert, die aufgerollt werden können, wie in Fig. 18 ersichtlich. Durch Aufrollen und Ausrollen der Platte 305 kann das dritte Fördermittel 300, 300/1, 300/2, wie in Fig. 18 dargestellt, zwischen seiner Arbeitsstellung 23 und seiner Ruhestellung 24 verstellt werden.

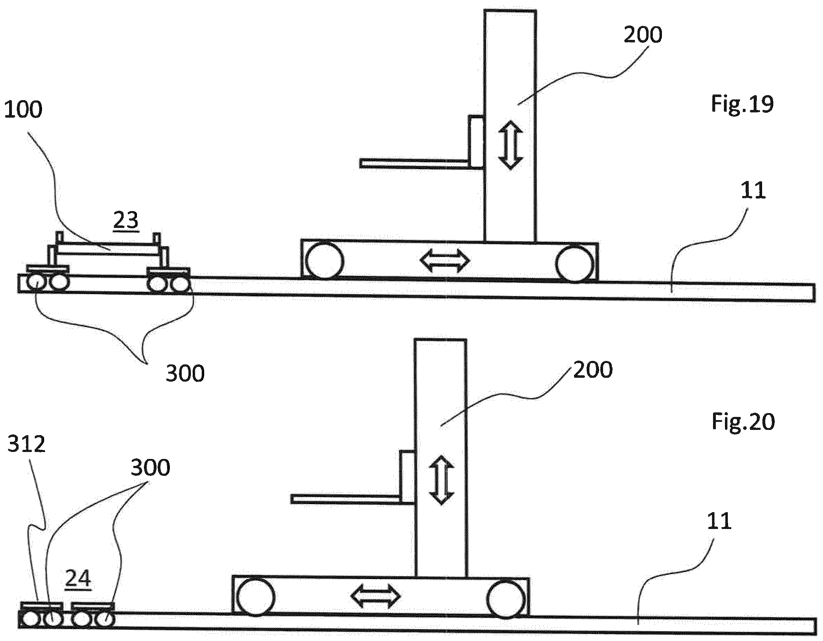

Fig. 19 zeigt ein weiteres drittes Fördermittel 300, 300/1, 300/2 in seiner Arbeitsstellung 23. Fig. 20 zeigt dieses in seiner Ruhestellung 24. Das dritte Fördermittel 300, 300/1, 300/2 weist eine zweigeteilte Platte 305 auf bzw. ist als solches zweigeteilt, weist also zweimal einen Fahrzeugunterbau 301 auf, der jeweils eigene Antriebsräder 302 und Führungsräder 303, also ein eigenes Fahrwerk 310 aufweist. Die zwei Teile des in Fig. 19 und 20 dargestellten dritten Fördermittels 300, 300/1, 300/2 sind besonders kompakt gebaut und können in der Arbeitsstellung 23 von der Handlingsbrücke 304 überbrückt werden. Zum Einnehmen der Ruhestellung 24 kann die Handlingsbrücke 304 von der zweigeteilten Platte 305 abgehoben werden, sodass die einzelnen Teile des dritten Fördermittels 300, 300/1, 300/2 in Richtung des Handlingbewegungspfads 20 bzw. auf diesem in Richtung der horizontalen Pickrichtung aufeinander zubewegt werden können. Es ist ersichtlich, dass dadurch ein Raumbedarf entlang der horizontalen Pickrichtung des Lagersystems 10 bzw. des Hochregallagers eingespart wird, sodass ein etwaiger Überstand über ein Ende der jeweiligen Gasse 17 reduziert oder gegebenenfalls gänzlich vermieden werden kann, sofern das entsprechende dritte Fördermittel 300, 300/1, 300/2 gerade nicht benötigt wird und sich in einer Parkposition an dem jeweiligen Ende der Gasse 17 befindet.

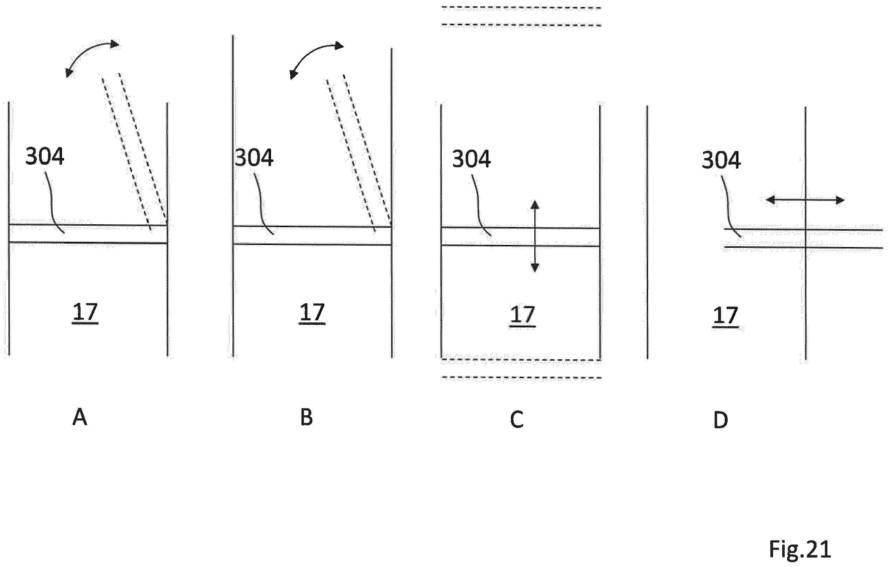

Fig. 21 zeigt vier schematische Darstellungen A bis D jeweils mit einer Gasse 17 eines Lagersystems 10 analog des Lagersystems. Bezüglich der Beschreibung des Lagersystems 10 wird auf die vorhergehenden Figuren verwiesen. Im Folgenden werden lediglich die Unterschiede erläutert.

Im Unterschied weist die Gasse 17 des nur teilweise dargestellten Lagersystems 10 eine ortsfeste Handlingbrücke 304 auf. Diese ist also nicht entlang der Längsrichtung der Gasse 17 verfahrbar. Um dennoch wahlweise dem nicht dargestellten zweiten Fördermittel 200 eine frei Fahrt in der Gasse 17, also entlang der Längsrichtung der Gasse 17, oder dem ersten Fördermittel 100, gegebenenfalls zusammen mit dem Stückgut 16, ein Überqueren der Gasse 17 zu ermöglichen, kann die ortsfeste Handlingbrücke 304 zwischen der Arbeitsstellung und der Ruhestellung verlagert werden. Die Handlingbrücke 304 kann also ortsfest in der Gasse 17 verbleiben, muss nicht an einem Ende geparkt werden und kann dennoch zwischen der Ruhestellung und der Arbeitsstellung verlagert werden.

In einer Darstellung A der Fig. 21 ist eine Seitenansicht des Lagersystems 10 mit Blickrichtung seitlich in die Gasse 17 dargestellt. Die Handlingbrücke 304 kann um eine waagrechte und sich in Längsrichtung der Gasse 17, insbesondere im Wesentlichen parallel zu einer Gassenwand, erstreckende Schwenkachse verschwenkt werden. Die Arbeitsstellung ist durchgezogen und die Ruhestellung gestrichelt dargestellt.

In einer Darstellung B der Fig. 21 ist eine Draufsicht des Lagersystems 10 mit Blickrichtung von oben in die Gasse 17 dargestellt. Die Handlingbrücke 304 kann um eine senkrechte und sich in der Gasse 17 von unten nach oben, insbesondere im Wesentlichen parallel zu einer Gassenwand, erstreckende Schwenkachse verschwenkt werden. Die Arbeitsstellung ist durchgezogen und die Ruhestellung gestrichelt dargestellt.

In den Darstellungen A und B ist es ebenso möglich, die Handlingsbrücke 304 zu teilen und die beiden Teile unabhängig voneinander aus der Gasse zu verschwenken. Ebenso ist es möglich die Brücke oder Teile der Brücke um eine Achse aus der Gasse zu schwenken, wobei die Schwenkachse auch an einer Ecke der Handlingsbrücke angeordnet sein kann. Grundsätzlich kann also die Handlingsbrücke 304 wie eine Drehbrücke gehandhabt werden.

In einer Darstellung C der Fig. 21 ist eine Seitenansicht des Lagersystems 10 mit Blickrichtung seitlich in die Gasse 17 dargestellt. Die Handlingbrücke 304 kann senkrecht in der Gasse 17, insbesondere im Wesentlichen parallel zu einer Gassenwand, verlagert werden. Die Handlingbrücke 304 kann also entweder in Richtung eines Bodens der Gasse 17 oder in Richtung eines dem Boden gegenüberliegenden oberen Endes verschoben werden. Es ist auch möglich beide Möglichkeiten des Verschiebens vorzusehen, wobei am Boden oder am oberen Ende die Ruhestellung erreicht ist, um dem zweiten Fördermittel 200 freie Durchfahrt zu gewähren. Die Arbeitsstellung ist durchgezogen und die möglichen Ruhestellungen sind gestrichelt dargestellt.

In einer Darstellung D der Fig. 21 ist eine Seitenansicht des Lagersystems 10 mit Blickrichtung seitlich in die Gasse 17 dargestellt. Die Handlingbrücke 304 kann horizontal in der Gasse 17, insbesondere im Wesentlichen senkrecht zu einer Gassenwand, verlagert oder verschoben werden. Wenn die Handlingbrücke 304 in die Gasse 17 gänzlich hineingeschoben ist, hat diese die Arbeitsstellung erreicht und kann zum Überqueren der Gasse 17 von dem ersten Fördermittel 100 überfahren werden. Falls die Handlingbrücke 304 in Richtung eines nicht näher dargestellten Lagerplatzes 19 der Gasse 17 verlagert ist, hat diese ihre Ruhestellung erreicht und gibt die Gasse 17 für eine Durchfahrt des zweiten Fördermittels frei. Die Darstellung D zeigt eine Zwischenstellung zwischen der Arbeitsstellung und der Ruhestellung.

Alternativ können die in Fig. 21 beschriebenen Möglichkeiten, zwischen der Ruhestellung und der Arbeitsstellung zu wechseln, auch bei einer nicht ortsfesten Handlingbrücke 304 bzw. dritten Fördermittel 300 vorgesehen sein.

### Bezugszeichenliste

| | | | |
|---|---|---|---|
| 10 | Lagersystem | 202 | Räder |
| 11 | zentrale Fahrschiene | 203 | Führungsräder |
| 12 | erste Regalreihe | 205 | Vertikalstange |
| 13 | zweite Regalreihe | 206 | Pickbrücke |
| 14 | dritte Regalreihe | 207 | Brückenbewegungspfad |
| 15 | Ausfahrt | 210 | Hubvorrichtung |
| 16 | Stückgut | 211 | Überhang |
| 17 | Gasse | 212 | Platte |
| 18 | Pickbewegungspfad | 213 | Fahrschienen |
| 19 | Lagerplatz | 214 | Flansch |
| 20 | Handlingbewegungspfad | 300 | drittes Fördermittel |
| 21 | Steuerung | 300/1 | erstes Handlingsfördermittel |
| 22 | Ausfahrbewegungspfad | 300/2 | zweites Handlingsfördermittel |
| 23 | Arbeitsstellung | 301 | Fahrzeugunterbau |
| 24 | Ruhestellung | 302 | Antriebsräder |
| 25 | Lagerplatzbewegungspfad | 303 | Führungsräder |
| 100 | erstes Fördermittel | 304 | Handlingsbrücke |
| 100/1 | erstes Satellitenfördermittel | 305 | Platte |
| 100/2 | zweites Satellitenfördermittel | 306 | erstes L-Profil |
| 101 | Fahrzeugunterbau | 307 | zweites L-Profil |
| 102 | Antriebsräder | 308 | U-Profil |
| 103 | Führungsräder | 309 | Fahrtrichtung |
| 104 | Hubtisch | 310 | Fahrwerk |
| 200 | zweites Fördermittel | 311 | Brückenbewegungspfad |
| 200/1 | erstes Pickfördermittel | 312 | Verstellvorrichtung |
| 200/2 | zweites Pickfördermittel | 313 | Führungsschiene |
| 201 | Fahrzeugunterbau | | |

## Patentansprüche

1. Verfahren zum Ausführen eines Arbeitsspiels eines Hochregallagers mit mehreren Lagerplätzen (19) und zumindest zwei Regalreihen (12, 13, 14), mit:
- Bilden eines Pickbewegungspfades (18) zwischen einem Lagerplatz (19) des Hochregallagers und einer Hubvorrichtung (210) eines zweiten Fördermittels (200, 200/1, 200/2) des Hochregallagers mittels einer Pickbrücke (206) der Hubvorrichtung (210),
- Fördern eines in dem Hochregallager lagerbaren Stückguts (16) entlang des Pickbewegungspfads (18),
- Überbrücken wenigstens einer zwischen den zumindest zwei Regalreihen (12, 13, 14) des Hochregallagers verbleibenden Gasse (17) des Hochregallagers, in der die Hubvorrichtung (210) bewegbar ist, mittels einer zusätzlichen, mittels eines dritten Fördermittels (300; 300/1; 300/2) verlagerbaren Handlingbrücke (304) zum Bilden eines Bewegungspfads (22),
- Verstellen des dritten Fördermittels (300; 300/1; 300/2) zwischen einer Arbeitsstellung (23) und einer Ruhestellung (24), wobei die Ruhestellung (24) einen verringerten Raumbedarf für die Bewegung des zweiten Fördermittels (200, 200/1, 200/2) aufweist, wobei die Handlingbrücke (304) in der Arbeitsstellung (23) die Gasse (17) überbrückt und in der Ruhestellung (24) das dritte Fördermittel (300; 300/1; 300/2) geparkt und/oder bereitgehalten wird,
- Verlagern der Pickbrücke (206) mittels des zweiten Fördermittels (200; 200/1, 200/2),
- Fördern des Stückguts (16) entlang des die Handlingbrücke umfassenden Bewegungspfads (22) mittels eines innerhalb wenigstens einer Regalebene des Hochregallagers unabhängig von einem Lagerzustand der Regalebene bewegbaren ersten Fördermittels (100; 100/1; 100/2).

2. Verfahren nach Anspruch 1, mit:
- Puffern des Stückguts (16) zwischen dem Fördern auf dem Pickbewegungspfad (18) und dem Bewegungspfad (22).

3. Verfahren nach einem der Ansprüche 1 oder 2, mit:
- Bilden des Pickbewegungspfads (18) und des Bewegungspfads (22) durch Überbrücken der Gasse (17) mittels einer gemeinsamen Brücke (206).

4. Verfahren nach dem vorhergehenden Anspruch, mit:
- Verlagern der Handlingbrücke (304) innerhalb der Gasse (17) zum wahlweisen Überbrücken von unterschiedlichen sich gegenüberliegenden Lagerplätzen (19) zweier die Gasse (17) bildenden Regalreihen (12, 13, 14) des Hochregallagers.

5. Verfahren nach einem der vorhergehenden Ansprüche, mit:
- Verlagern der Handlingbrücke (304) entlang eines gemeinsamen Handlingbewegungspfades (20) an eine Position, an der der Bewegungspfad (22) gebildet ist, wobei der Bewegungspfad (22) in einer Ebene liegt und/oder
- Verlagern der Hubvorrichtung (210) entlang desselben gemeinsamen Handlingbewegungspfades (20) von der Position weg, falls sich die Hubvorrichtung (210) zuvor an der Position befunden hat, oder zum Bilden des Pickbewegungspfads.

6. Verfahren nach Anspruch 1, mit:
- Fördern des mittels des ersten Fördermittels (100; 100/1; 100/2) unterfahrenen und angehobenen Stückguts (16) durch Verlagern des ersten Fördermittels (100; 100/1; 100/2).

7. Verfahren nach einem der vorhergehenden Ansprüche, mit:
- Fördern des Stückgutes (16) und/oder des ersten Fördermittels (100; 100/1; 100/2) durch
- Verlagern des das Stückgut (16) tragenden ersten Fördermittels (100; 100/1; 100/2) oder des ersten Fördermittels (100; 100/1; 100/2) ohne das Stückgut (16) auf die Handlingbrücke (304) des dritten Fördermittels (300; 300/1; 300/2) und
- Verlagern des die Handlingbrücke (304), das erste Fördermittel (100; 100/1; 100/2) und/oder des das Stückgut (16) tragenden dritten Fördermittels (300; 300/1; 3002) und/oder
- Verlagern des dritten Fördermittels (300; 300/1; 300;2) entlang des Handlingbewegungspfades (20).

8. Verfahren nach einem der vorhergehenden Ansprüche, mit:
- Bewegen der zusätzlichen Handlingbrücke (304) in der Gasse (17) entlang einer senkrecht zu dem Pickbewegungspfad (18) und dem Bewegungspfad (22) verlaufenden Fahrtrichtung (309).

9. Hochregallager zum Lagern von Stückgut (16), mit:
- zumindest einer Ausfahrt (15), über die das Stückgut (16) ein- und auslagerbar ist,
- einer Vielzahl von entlang einer Auslagerungsrichtung bestückbaren Lagerplätzen (19),
- wenigstens einem innerhalb wenigstens einer Regalebene des Hochregallagers unabhängig von einem Lagerzustand der Regalebene bewegbaren ersten Fördermittel (100; 100/1; 100/2) zum Verlagern des Stückguts (16) entlang der Auslagerungsrichtung,
- wenigstens einem zweiten Fördermittel (200; 200/1; 200/2) mit einer Hubvorrichtung (210) zum Picken und Verlagern des Stückguts (16) in einer horizontalen und vertikalen Pickrichtung,
- wenigstens einem entlang der horizontalen Pickrichtung verlagerbaren dritten Fördermittel (300; 300/1; 300/2), das eine Handlingbrücke (304) mit einem entlang der Auslagerungsrichtung verlaufenden Brückenbewegungspfad (311) zum Überbrücken wenigstens einer zwischen den zumindest zwei Regalreihen (12, 13, 14) des Hochregallagers verbleibenden Gasse (17) des Hochregallagers aufweist, in der das zweite Fördermittel (200, 200/1, 200/2) bewegbar ist,
- einer Verstellvorrichtung (312), mittels der das dritte Fördermittel (300; 300/1; 300/2) zwischen einer Arbeitsstellung (23) und einer Ruhestellung (24) überführbar ist, wobei die Ruhestellung (24) einen verringerten Raumbedarf für die Bewegung des zweiten Fördermittels (200, 200/1, 200/2) aufweist und in der Ruhestellung (24) das dritte Fördermittel (300; 300/1; 300/2) geparkt und/oder bereitgehalten wird und in der Arbeitsstellung (23) die Gasse (17) überbrückbar ist.

10. Hochregallager nach Anspruch 9, mit einem entlang einer Regalreihe (12, 13, 14) oder zwischen zwei der Regalreihen (12, 13, 14) und entlang der horizontalen Pickrichtung verlaufenden Handlingbewegungspfad (20), der von dem zweiten (200; 200/1; 200/2) und dritten (300; 300/1; 300/2) Fördermittel für Verlagerungen entlang der horizontalen Pickrichtung gemeinsam nutzbar ist.

## Claims

1. A method for executing a work cycle of a high-bay storage unit with a plurality of storage places (19) and at least two rows of racks (12,13,14), with:
- creating a picking movement path (18) between a storage place (19) of the high-bay storage unit and a lifting device (210) of a second conveying means (200, 200/1, 200/2) of the high-bay storage unit by means of a picking bridge (206) of the lifting device (210),
- conveying of a goods item (16) stored in the high-bay storage unit along the picking movement path (18),
- bridging over at least one lane (17) of the high-bay storage unit remaining between the at least two rows of racks (12,13,14) of the high-bay storage unit, in which lane the lifting device (210) is moveable, by means of an additional handling bridge (304) displaceable by a third conveying means (300; 300/1; 300/2) for the creation of a movement path (22),
- adjusting the third conveying means (300; 300/1; 300/2) between a working position (23) and a rest position (24), wherein the rest position (24) has a reduced space requirement for the movement of the second conveying means (200, 200/1, 200/2), wherein the handling bridge (304) bridges over the lane (17) in the working position (23) and in the rest position (24) the third conveying means (300; 300/1; 300/2) is parked and/or held in readiness,
- displacing the picking bridge (206) by means of the second conveying means (200; 200/1, 200/2),
- conveying the goods item (16) along the movement path (22) including the handling bridge by means of a first conveying means (100; 100/1; 100/2) moveable within at least one rack plane of the high-bay storage unit independently of a storage state of the rack plane.

2. A method according to claim 1, with:
- buffering of the goods item (16) between the conveying on the picking movement path (18) and the movement path (22).

3. A method according to claim 1 or 2, with:
- creating the picking movement path (18) and the movement path (22) by bridging over the lane (17) by means of a common bridge (206).

4. A method according to the preceding claims, with:
- displacing the handling bridge (304) within the lane (17) for the selective bridging over of differing and opposing storage places (19) of two rows of racks (12,13,14) of the high-bay storage unit forming the lane (17).

5. A method according to one of the preceding claims, with:
- displacing the handling bridge (304) along a common handling movement path (20) to a position at which the movement path (22) is created, wherein the movement path (22) lies in one plane and/or
- displacing the lifting device (210) along the same common handling movement path (20) away from the position, in case the lifting device (210) is previously located at the position, or to create the picking path.

6. A method according to claim 1, with:
- conveying the goods item (16) driven under and lifted by the first conveying means (100; 100/1; 100/2) by displacing the first conveying means (100; 100/1; 100/2).

7. A method according to one of the preceding claims, with:
- conveying the goods item (16) and/or the first conveying means (100; 100/1; 100/2) by
- displacing the first conveying means (100; 100/1; 100/2) carrying the goods item (16) or the first conveying means (100; 100/1; 100/2) without the goods item (16) on the handling bridge (304) of the third conveying means (300; 300/1; 300/2) and
- displacing the third conveying means (300; 300/1; 300/2) carrying the handling bridge (304), the first conveying means (100; 100/1; 100/2) and/or the goods item (16) and/or
- displacing the third conveying means (300; 300/1; 300/2) along the handling movement path (20).

8. A method according to one of the preceding claims, with:
- moving the additional handling bridge (304) in the lane (17) along a direction of travel (309) running perpendicular to the picking movement path (18) and the movement path (22).

9. A high-bay storage unit for storing goods items (16), with:
- at least one gateway (15), by means of which a goods item (16) can be stored or removed from storage,
- a multiplicity of storage places (19) loadable along a transfer direction,
- at least one first conveying means (100; 100/1; 100/2) moveable within at least one rack plane of the high-bay storage unit independently of a storage state of the rack plane for displacing the goods item (16) along the transfer direction,
- at least one second conveying means (200; 200/1; 200/2) with a lifting device (210) for picking and displacing the goods item (16) in a horizontal and vertical picking direction,
- at least one third conveying means (300; 300/1; 300/2) displaceable along the horizontal picking direction, which has a handling bridge (304) with a bridge movement path (311) running along the transfer direction to bridge over at least one lane (17) of the high-bay storage unit remaining between the at least two rows of racks (12,13,14) of the high-bay storage unit, in which the second conveying means (200, 200/1, 200/2) is moveable,
- an adjusting device (312), by means of which the third conveying means (300; 300/1; 300/2) is transferable between a working position (23) and a rest position (24), wherein the rest position (24) has a reduced space requirement for the movement of the second conveying means (200, 200/1, 200/2) and in the rest position (24) the third conveying means (300; 300/1; 300/2) is parked and/or held in readiness and in the working position (23) the lane (17) can be bridged over.

10. A high-bay storage unit according to claim 9, with a handling movement path (20) running along a row of racks (12, 13, 14) or between two of the rows of racks (12, 13, 14) and along the horizontal picking direction, which handling movement path is useable in common by the second (200; 200/1; 200/2) and third (300; 300/1; 300/2) conveying means for displacements along the horizontal picking direction.

## Revendications

1. Procédé d'exécution d'un cycle de travail d'un entrepôt de stockage en hauteur ayant plusieurs emplacements de stockage (19) et au moins deux rangées d'étagères (12, 13, 14), comportant les étapes consistant à :
- former un premier chemin de déplacement de saisie (18) entre un emplacement de stockage (19) de l'entrepôt de stockage en hauteur et un dispositif de levage (210) d'un deuxième moyen de transport (200, 200/1, 200/2) de l'entrepôt de stockage en hauteur au moyen d'un pont de saisie (206) du dispositif de levage (210),
- faire avancer une marchandise à l'unité (16) pouvant être stockée dans l'entrepôt de stockage en hauteur le long du chemin de déplacement de saisie (18),
- enjamber au moins espace (17) restant entre les deux au moins rangées d'étagères (12, 13, 14) de l'entrepôt de stockage en hauteur, espace dans lequel le dispositif de levage (210) est mobile, au moyen d'un pont de manutention (304) déplaçable au moyen d'un troisième moyen de transport (300 ; 300/1 ; 300/2) pour la formation d'un chemin de déplacement (22),
- déplacer le troisième moyen de transport (300 ; 300/1 ; 300/2) entre une position de travail (23) et une position de repos (24), la position de repos (24) présentant un besoin d'espace réduit pour le déplacement du deuxième moyen de transport (200, 200/1, 200/2), le pont de manutention (304) enjambant l'espace (17) dans la position de travail (23) et le troisième moyen de transport (300 ; 300/1 ; 300/2) étant laissé dans la position de repos (24) et/ou se tenant prêt,
- déplacer le pont de saisie (206) au moyen du deuxième moyen de transport (200 ; 200/1, 200/2),
- faire avancer la marchandise à l'unité (16) le long du chemin de déplacement (22) comprenant le pont de manutention au moyen d'un premier moyen de transport (100 ; 100/1 ; 100/2) mobile à l'intérieur d'au moins un plan d'étagère de l'entrepôt de stockage en hauteur, indépendamment d'un état de stockage du plan d'étagère.

2. Procédé selon la revendication 1, comprenant :
- la mise en réserve de la marchandise à l'unité (16) entre l'avancement sur le chemin de déplacement de saisie (18) et le chemin de déplacement (22).

3. Procédé selon l'une des revendications 1 et 2, comprenant :
- la formation du chemin de déplacement de saisie (18) et du chemin de déplacement (22) par enjambement de l'espace (17) au moyen d'un pont commun (206).

4. Procédé selon la revendication précédente, comprenant :
- le déplacement du pont de manutention (304) à l'intérieur de l'espace (17) pour enjamber au choix différents emplacements de stockage (19) se faisant face, de deux rangées d'étagères (12, 13, 14) de l'entrepôt de stockage en hauteur formant l'espace (17).

5. Procédé selon l'une des revendications précédentes, comportant :
- le déplacement du pont de manutention (304) le long d'un chemin de déplacement de manutention commun (20) à un endroit où le chemin de déplacement (22) est formé, le chemin de déplacement (22) étant dans un plan et/ou
- l'éloignement du dispositif de levage (210) le long du même chemin de déplacement de manutention (20) commun dudit endroit, au cas où le dispositif de levage (210) s'est préalablement trouvé audit endroit ou pour la formation du chemin de déplacement de saisie.

6. Procédé selon la revendication 1, comportant :
- l'avancement de la marchandise à l'unité (16) abaissée et soulevée au moyen du premier moyen de transport (100 ; 100/1 ; 100/2) par déplacement du premier moyen de transport (100 ; 100/1 ; 100/2).

7. Procédé selon l'une des revendications précédentes, comportant :
- l'avancement de la marchandise à l'unité (16) et/ou du premier moyen de transport (100 ; 100/1 ; 100/2) par
- déplacement du premier moyen de transport (100 ; 100/1 ; 100/2) transportant la marchandise à l'unité (16) ou du premier moyen de transport (100 ; 100/1 ; 100/2) sans la marchandise à l'unité (16) sur le pont de manutention (304) du troisième moyen de transport (300 ; 300/1 ; 300/2) et
- déplacement du troisième moyen de transport (300 ; 300/1 ; 300/2) transportant le pont de manutention (304), le premier moyen de transport (100 ; 100/1 ; 100/2) et/ou la marchandise à l'unité (16) et/ou
- déplacement du troisième moyen de transport (300 ; 300/1 ; 300/2) le long du chemin de déplacement de manutention (20).

8. Procédé selon l'une des revendications précédentes, comportant :
- le déplacement du pont de manutention supplémentaire (304) dans l'espace (17) le long d'une direction d'avancement s'étendant perpendiculairement au chemin de déplacement de saisie (18) et au chemin déplacement (22).

9. Entrepôt de stockage en hauteur pour le stockage de marchandises au détail (16), comportant :
- au moins une sortie (15) au-dessus de laquelle la marchandise à l'unité (16) peut être stockée et déstockée,
- une pluralité d'emplacements de stockage (19) pouvant être garnis le long d'une direction de déstockage,
- au moins un premier moyen de transport (100 ; 100/1 ; 100/2) mobile à l'intérieur d'au moins un plan d'étagère de l'entrepôt de stockage en hauteur indépendamment d'un état de stockage du plan d'étagère, pour le déplacement de la marchandise à l'unité (19) le long de la direction de déstockage,
- au moins un deuxième moyen de transport (200 ; 200/1 ; 200/2) avec un dispositif de levage (210) pour la saisie et le déplacement de la marchandise à l'unité (16) dans une direction de saisie horizontale et verticale,
- au moins un troisième moyen de transport (300 ; 300/1 ; 300/2) déplaçable le long de la direction de saisie horizontale, qui présente un pont de manutention (304) avec un chemin de déplacement de pont (311) s'étendant le long de la direction de déstockage pour enjamber au moins un espace (17) restant entre les deux rangées au moins (12, 13, 14) de l'entrepôt de stockage en hauteur, dans lequel le deuxième moyen de transport (200, 200/1, 200/2) est mobile,
- un dispositif de réglage (312), grâce auquel le troisième moyen de transport (300 ; 300/1 ; 300/2) est commutable entre une position de travail (23) et une position de repos (24), la position de repos (24), la position de repos (24) présentant un besoin d'espace réduit pour le déplacement du deuxième moyen de transport (200, 200/1, 200/2) et le troisième moyen de transport étant laissé et/ou se tenant prêt dans la position de repos (24) et pouvant enjamber l'espace (17) dans la position de travail (23).

10. Entrepôt de stockage en hauteur selon la revendication 9, avec un chemin de déplacement de manutention (20) s'étendant le long d'une rangée d'étagères (12, 13, 14) ou entre deux des rangées d'étagères (12, 13, 14) et le long de la direction de saisie horizontale, chemin qui peut être utilisé en commun par le deuxième (200 ; 200/1 ; 200/2) et le troisième (300 ; 300/1 ; 300/2) moyens de transport pour des déplacements le long de la direction de saisie horizontale.
